# FASCICULE DE BREVET EUROPEEN

(11) **EP 2 039 114 B1**
(45) Date de publication et mention de la délivrance du brevet: **14.12.2016**
(21) Numéro de dépôt: 07803830.4
(22) Date de dépôt: 03.07.2007
(51) Int. Cl.: H04L 29/06

(54) **PROCEDE DE CONTROLE D'APPLICATION DANS UN CHIPSET NFC COMPRENANT PLUSIEURS PROCESSEURS HOTES**
VERFAHREN ZUR ANWENDUNGSSTEUERUNG IN EINEM NFC-CHIPSET MIT MEHREREN HOST-PROZESSOREN
METHOD OF APPLICATION CONTROL IN AN NFC CHIP SET COMPRISING SEVERAL HOST PROCESSORS

(30) Priorité: 10.07.2006 FR 0606288
(43) Date de publication de la demande: 25.03.2009
(73) Titulaire: Inside Secure, 13590 Meyreuil (FR)
(72) Inventeur: CHARRAT, Bruno, F-13090 Aix En Provence (FR); MARTINEAU, Philippe, F-13710 Fuveau (FR)
(74) Mandataire: Marchand, André
(86) Numéro de dépôt international: PCT/FR2007/001122
(87) Numéro de publication internationale: WO 2008/006958

(56) Documents cités:
- EP-A- 0 949 595
- WO-A-98/57474
- WO-A-2004/029860
- DE-A1- 19 816 575
- US-A- 5 912 453
- US-A1- 2004 049 451
- URIEN P: "Internet card, a smart card as a true Internet node" COMPUTER COMMUNICATIONS, ELSEVIER SCIENCE PUBLISHERS BV, AMSTERDAM, NL, vol. 23, no. 17, 1 novembre 2000 (2000-11-01), pages 1655-1666, XP004238469 ISSN: 0140-3664

## Description

La présente invention concerne un procédé de contrôle de l'exécution d'une application dans un système comprenant au moins deux processeurs hôtes et une interface d'émission/réception de données sans contact de type RFID, l'un des processeurs hôte étant sécurisé.

La présente invention concerne notamment la réalisation d'un système NFC (Near Field Communication).

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des composants NFC présentant plusieurs modes de fonctionnement, à savoir un mode "lecteur" (Reader Mode), un mode "émulation de carte", et un mode "device " (appelé également mode "device-to-device" soit "dispositif à dispositif"). Dans le mode "lecteur", le composant NFC fonctionne comme un lecteur RFID conventionnel pour accéder en lecture ou écriture à une puce RFID (carte à puce ou étiquette sans contact). Il émet un champ magnétique, envoie des données par modulation de l'amplitude du champ magnétique et reçoit des données par modulation de charge et couplage inductif. Dans le mode "émulation", décrit par le brevet EP 1 327 222 au nom de la demanderesse, le composant NFC fonctionne de façon passive à la manière d'un transpondeur pour dialoguer avec un autre lecteur et être vu par l'autre lecteur comme une puce RFID. Le composant n'émet pas de champ magnétique, reçoit des données en démodulant un champ magnétique émis par l'autre lecteur et émet des données par modulation de l'impédance de son circuit d'antenne (modulation de charge). Dans le mode "device", le composant doit s'apparier avec un autre lecteur se trouvant également dans le même mode de fonctionnement, et chaque lecteur se place alternativement dans un état passif (sans émission de champ) pour recevoir des données et dans un état actif (avec émission de champ) pour émettre des données.

En sus de ces trois modes de fonctionnement (d'autres modes de fonctionnement pourraient être imaginés dans le futur), un composant NFC peut mettre en oeuvre plusieurs protocoles de communication sans contact et est par exemple capable d'échanger des données suivant le protocole ISO 14443-A, le protocole ISO 14443-B, le protocole ISO 15693, etc.. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif. Un composant NFC est donc un dispositif multimode et multiprotocole. La demanderesse commercialise par exemple un composant NFC sous la désignation "MicroRead".

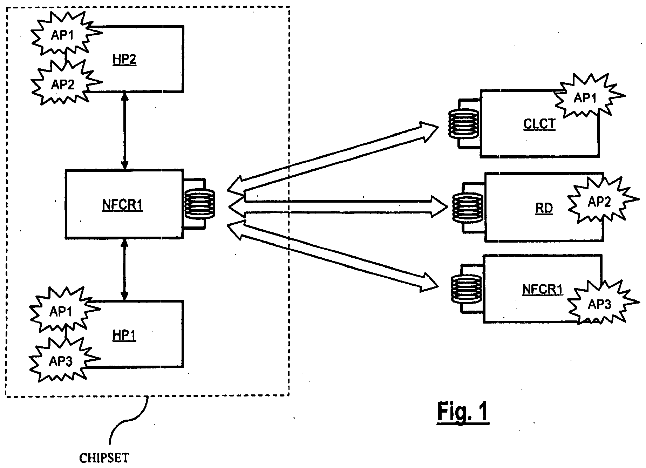

En raison de ses capacités de communication étendues, un composant NFC est destiné à être intégré dans des dispositifs portatifs tels des téléphones portables ou des PDA (Assistant Numérique Personnel). On est donc amené à réaliser un système NFC également appelé "chipset NFC" du type représenté en figure 1, c'est à dire un ensemble de puces comprenant un composant NFC (référencé "NFCR1") et au moins un premier processeur hôte HP1. On entend par "processeur hôte" tout circuit intégré comprenant un microprocesseur ou un microcontrôleur et qui est connecté à un port du composant NFC. Dans de nombreuses applications, le système NFC comprend également un second processeur hôte HP2.

Il est à noter que les processeurs hôtes peuvent être totalement virtuels et intégrés dans le composant NFC lui-même.

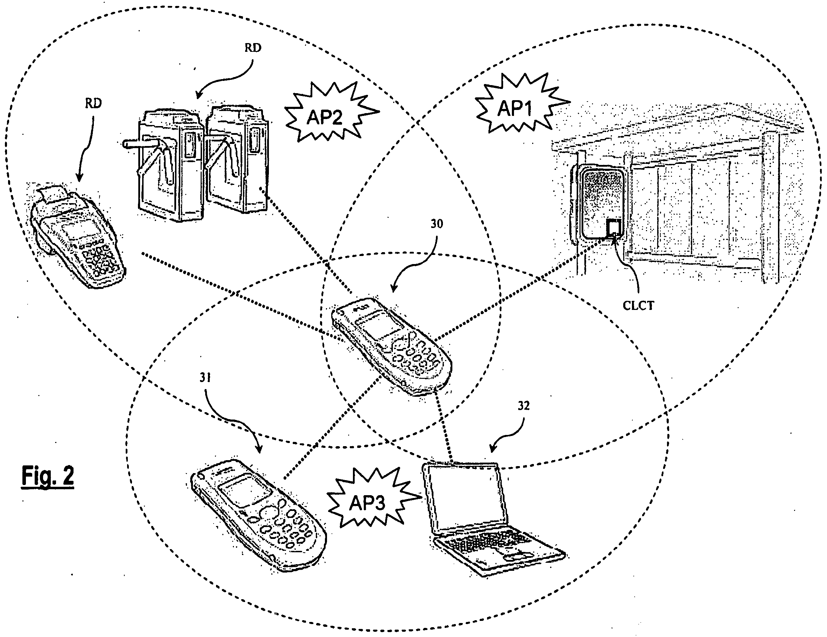

Le premier processeur hôte HP1 est le processeur principal du dispositif dans lequel le composant NFC est embarqué, tandis que le second processeur hôte HP2 est un circuit sécurisé. Le processeur hôte HP1 est généralement un processeur non sécurisé, par exemple le circuit de bande de base d'un téléphone mobile ("baseband" ou circuit de radiotéléphonie). Le processeur hôte HP2 est par exemple une carte SIM (c'est-à-dire le microcontrôleur présent dans une carte SIM). Les ressources du composant NFC sont donc mises à la disposition des processeurs HP1, HP2 pour leur permettre de gérer des applications sans contact. De telles applications sont illustrées sur la figure 2 qui représente un téléphone mobile 30 équipé du système (chipset) NFC de la figure 1. On distingue :
1) des applications de type AP1 : le composant NFC du téléphone mobile 30 est en mode lecteur pour lire ou écrire un circuit intégré sans contact CLCT. Le téléphone mobile est dans ce cas utilisé comme un lecteur RFID. Ce type d'application peut être gratuit et consister par exemple dans la lecture de données publicitaires insérées dans un affichage publicitaire d'une aubette. L'application peut aussi être payante et consister par exemple dans la lecture d'informations réservées à des abonnés. Le programme de l'application AP1 est de préférence détenu et exécuté par le processeur HP1 si le service est gratuit ou est de préférence détenu et exécuté par le processeur HP2 s'il est payant car il nécessite une identification de l'abonné. Ainsi, comme illustré en figure 1, une application AP1 peut être prise en charge par le processeur HP1 ou le processeur HP2.
2) des applications de type AP2 : le composant NFC du téléphone 30 est en mode émulation de carte pour être lu par des lecteurs RD conventionnels dans des applications de paiement ou de contrôle d'accès payant (machine de paiement, entrée de métro, etc.). Le téléphone mobile 30 est alors utilisé comme une carte à puce. Le programme de l'application AP2 est de préférence détenu et exécuté par le processeur sécurisé HP2, comme représenté en figure 1, car l'accès au service nécessite une identification de l'abonné.
3) des applications de type AP3 : le composant NFC du téléphone 30 est en mode "device" et dialogue avec un autre dispositif, par exemple un lecteur embarqué dans un autre téléphone mobile 31 ou dans un ordinateur 32. Ce type d'application est généralement gratuit et permet de transférer des paquets de données d'un dispositif à l'autre (transfert de fichiers en point à point notamment). Le programme de l'application AP3 est de préférence détenu et exécuté par le processeur non sécurisé HP1, comme illustré en figure 1, qui dispose d'une puissance de calcul supérieure au processeur sécurisé HP2 si celui-ci est un processeur de carte SIM.

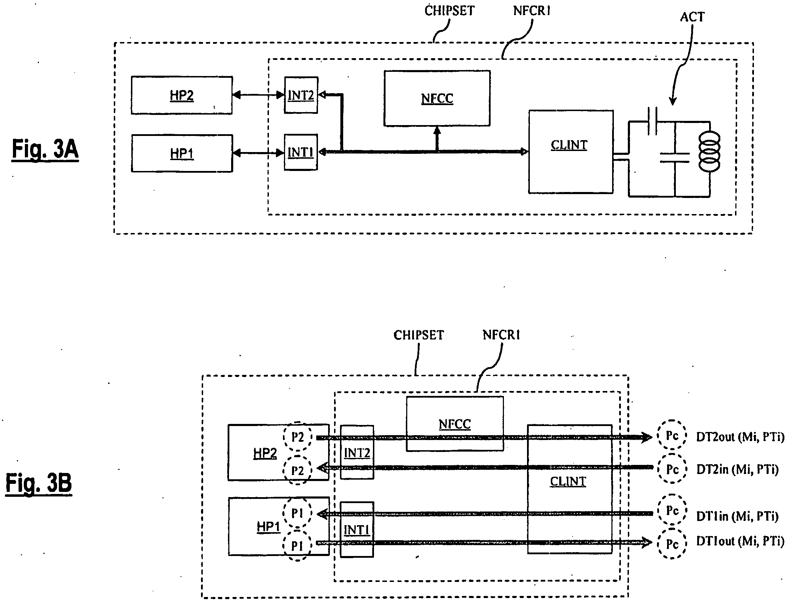

Ainsi, la réalisation d'un système NFC nécessite de prévoir un routage des flux de données entre chacun des processeurs HP1, HP2 et le composant NFC (données émises via le canal de transmission de données sans contact) et des flux de données entrantes (données reçues via le canal de transmission de données sans contact) entre le composant NFC et chacun des processeurs HP1, HP2. Cela pose un certain nombre de problèmes pratiques qui seront compris en se référant aux figures 3A, 3B.

La figure 3A représente schématiquement l'architecture du composant NFC. Le composant comprend une interface d'émission/réception de données sans contact CLINT équipée d'un circuit d'antenne ACT, des interfaces de communication filaires INT1, INT2 reliées à l'interface CLINT, et un contrôleur NFCC. L'interface INT1 est connectée au processeur hôte HP1, et l'interface INT2 connectée au processeur hôte HP2. L'ensemble forme un système NFC (désigné "CHIPSET").

La figure 3B représente les flux de données devant être aiguillés pour que les ressources de l'interface d'émission/réception de données sans contact CLINT puissent être utilisées par chacun des processeurs HP1, HP2. On suppose dans un souci de simplicité que l'interface CLINT peut émettre ou recevoir des données selon trois protocoles PT1, PT2, PT3 seulement, par exemple ISO 14443-A, ISO 14443-B et ISO 15693, et présente les trois modes de fonctionnement M1, M2, M3 susmentionnés (mode lecteur, mode émulation et mode "device"). On distingue ainsi quatre types différents de flux de données :
1) un flux de données sortant DT1out(Mi, PTi) issu d'un point source P1 localisé dans le processeur HP1, transmis à un point de destination Pc localisé dans l'interface CLINT puis transmis par celle-ci dans un canal de transmission de données sans contact créé suivant un protocole PTi (PT1, PT2 ou PT3) et un mode de fonctionnement Mi (M1, M2 ou M3),
2) un flux de données sortant DT2out Mi, PTi) issu d'un point source P2 localisé dans le processeur HP2, transmis à un point de destination Pc localisé dans l'interface CLINT puis transmis par celle-ci via un canal de transmission de données sans contact créé suivant un protocole PTi et un mode de fonctionnement Mi,
3) un flux de données entrant DT1n(Mi, PTi) reçu par l'interface CLINT via un canal de transmission de données sans contact créé suivant un protocole PTi et un mode de fonctionnement Mi, puis transmis par l'interface CLINT à partir d'un point source Pc jusqu'à un point de destination P1 se trouvant dans le processeur HP1,
4) un flux de données entrant DT2in(Mi, PTi) reçu par l'interface CLINT via un canal de transmission de données sans contact créé suivant un protocole PTi et un mode de fonctionnement Mi, puis transmis par l'interface CLINT à partir d'un point source Pc jusqu'à un point de destination P2 se trouvant dans le processeur HP2.

Chaque flux de données sortant pouvant être émis dans trois modes de fonctionnement M1 M2, M3 et selon trois protocoles PT1, PT2, PT3 il vient que 9 configurations différentes sont possibles pour chaque flux de données sortant (en supposant que chaque combinaison mode Mi et protocole PTi soit autorisée). Cela signifie qu'il ne suffit pas que l'un des processeurs HP1 ou HP2 envoie à l'interface CLINT les données à émettre. Le processeur doit également préciser, pour chaque chaîne de données émise, la configuration mode/protocole Mi/PTi à utiliser par l'interface CLINT pour transmettre ces données dans un canal de transmission de données sans contact.

Pour permettre le routage de données sortantes tout en permettant de configurer l'interface CLINT de façon appropriée, il a été proposé de prévoir un protocole de transfert de données HCI ("Host Controller Interface") de type "universel", permettant à tout type de processeur hôte de fournir à l'interface CLINT des données à émettre, tout en spécifiant la configuration à utiliser (protocole PTi et mode de fonctionnement Mi) pour transmettre les données dans le canal de communication sans contact. Un tel protocole HCI prévoit des trames de données comprenant chacune des champs d'en-tête et des champs de données. Les champs d'en-tête comprennent les informations nécessaires au contrôle de l'interface CLINT, notamment des champs spécifiant les points de départ et de destination des données, le mode de fonctionnement et le protocole à utiliser par l'interface CLINT.

Par ailleurs, le document US 2004/049451 décrit un transpondeur RFID et un lecteur ayant chacun un seul processeur et une interface de communication et une procédure d'authentification mutuelle exécutée par le transpondeur et le lecteur. Le document EP 0 949 595 décrit un procédé pour contrôler l'installation de nouvelles applications dans la carte à puce. Ce procédé fait intervenir une application maître et une application de contrôle. L'application maître assure les fonctions d'arbitre, de contrôle d'accès et d'acheminement de messages entre les applications de la carte à puce tout en laissant à l'application destinatrice d'une requête de traiter ou non la requête.

Un premier objectif que vise l'invention est de pouvoir contrôler les flux de données entre le processeur non sécurisé HP1 du système NFC et le point source ou destination Pc (données sans contact émises ou reçues via l'interface CLINT). De tels flux de données correspondent en effet à des applications NFC que les fournisseurs de services ("providers") veulent pouvoir contrôler en vue d'une exploitation commerciale, malgré le fait que le processeur HP1 ne soit pas sécurisé. Préférentiellement, on souhaite également pouvoir contrôler des flux de données entre le processeur non sécurisé HP1, d'autres processeurs sécurisés pouvant faire partie du système, et l'interface CLINT.

Par ailleurs, le protocole HCI classique prévoit des trames de données ayant des champs d'en-tête longs et complexes, nécessitant un temps de traitement non négligeable avant le traitement des données elles-mêmes. Ce problème est appelé "overheading", ce qui signifie que des en-têtes de trames trop longues surchargent les flux de données et grèvent le temps de transmission des données. Ces champs d'en-tête de grande taille nécessitent de plus des circuits tampon (buffers) de grande taille et une puissance de traitement élevée.

Ainsi, un autre objectif de la présente invention est de prévoir un procédé de routage de données dans un système NFC qui soit simple à mettre en oeuvre et ne nécessite pas des champs d'en-tête de grande longueur.

Au moins un objectif de l'invention est atteint par la prévision d'un procédé de contrôle de l'exécution d'une application dans un système comprenant plusieurs processeurs hôte et une interface d'émission/réception de données sans contact de type NFC, pilotée par un contrôleur, les processeurs hôte, le contrôleur et l'interface d'émission/réception étant interconnectés. Selon un mode de réalisation de l'invention, plusieurs chemins de données sont définis dans le système, chaque chemin de données comprenant un point source et un point de destination, chacun des points source et destination étant localisés dans l'un des processeurs hôte ou dans l'interface d'émission/ réception, le contrôle de l'exécution d'une application étant basé sur un contrôle d'un des chemins de données dans lequel des données de l'application sont transmises, le procédé comprenant des étapes consistant à : recevoir par le contrôleur une requête d'utilisation d'un des chemins de données, émise par le point source du chemin de données et désignant le point de destination du chemin de données, si le chemin de données est dans un état non ouvert, demander l'autorisation d'ouvrir le chemin de données à une fonction de contrôle d'application exécutée par un premier des processeurs hôte, et ouvrir le chemin de données si la fonction de contrôle d'application autorise l'ouverture du chemin de données, afin de permettre à l'application d'être exécutée.

Selon un mode de réalisation de l'invention, le premier processeur hôte est un circuit sécurisé tel qu'un circuit intégré de carte SIM.

Selon un mode de réalisation de l'invention, le système comprend au moins un second processeur hôte exécutant l'application.

Selon un mode de réalisation de l'invention, le procédé comprend une étape préliminaire d'authentification de la fonction de contrôle d'application, conduite avant l'étape de demande d'autorisation, l'ouverture du chemin de données n'étant pas autorisée si la fonction de contrôle d'application n'a pas été authentifiée.

Selon un mode de réalisation de l'invention, le procédé comprend une étape consistant à fournir à la fonction de contrôle d'application une clé de session qui est utilisée ensuite pour chiffrer les données échangées avec la fonction de contrôle d'application, si la fonction de contrôle d'application a été authentifiée.

Selon un mode de réalisation de l'invention, le procédé comprend une étape d'authentification par la fonction de contrôle d'application, du point source ayant émis la requête d'utilisation du chemin de données, la fonction de contrôle d'application autorisant l'ouverture du chemin de données que si l'authentification a réussi.

Selon un mode de réalisation de l'invention, l'authentification du point source ayant émis la requête d'utilisation du chemin de données comprend une étape de vérification d'un certificat fourni par une autorité de certification à un processeur hôte dans lequel est localisé le point source à authentifier.

Selon un mode de réalisation de l'invention, l'ouverture du chemin de données comprend les étapes consistant à :
- attribuer au chemin de données un numéro de canal de routage, et mémoriser le numéro de canal de routage et des paramètres de routage comprenant au moins un identifiant du point source et un identifiant du point de destination,
- envoyer au point de destination, des données fournies par le point source en les encapsulant dans une trame ayant un champ d'en-tête comprenant le numéro de canal de routage, et
- sur réception de données encapsulées dans une trame ayant un champ d'en-tête comprenant le numéro de canal de routage, transmettre les données vers le point de destination des données correspondant à l'identifiant du point de destination mémorisé.

Selon un mode de réalisation de l'invention, la fonction de contrôle d'application autorise ou non l'ouverture d'un chemin de donnée en fonction des paramètres de routage du chemin de données à ouvrir.

Selon un mode de réalisation de l'invention, l'interface d'émission/réception est configurable selon plusieurs modes de fonctionnement et selon plusieurs protocoles de communication sans contact, la fonction de contrôle d'application autorisant ou non l'ouverture d'un chemin de donnée en fonction d'un des modes de fonctionnement et d'un des protocoles de communication attribués au chemin de données à ouvrir.

Selon un mode de réalisation de l'invention, le procédé comprend, en réponse à une autorisation d'ouverture de chemin de données entre un point source et un point de destination localisé dans l'interface d'émission/réception de données sans contact, une étape d'ouverture d'un chemin de données entre le point source et l'interface d'émission/réception pour qu'elle émette des données dans un canal de transmission de données sans contact en utilisant des paramètres de mode de fonctionnement et de protocole de communication sans contact mémorisés pour le chemin de données par l'intermédiaire duquel les données à émettre ont été reçues.

Selon un mode de réalisation de l'invention, le procédé comprend l'ouverture simultanée plusieurs chemins de données, le numéro de canal de routage et les paramètres de routage de chaque chemin de données ouvert étant mémorisés dans une table de routage, le procédé comprenant une étape de recherche dans la table de routage d'un point de destination de données reçues encapsulées dans une trame, en utilisant le numéro de canal de routage en tant qu'index de sélection du point de destination.

Selon un mode de réalisation de l'invention, le procédé comprend les étapes consistant à :
- préenregistrer dans une table de routage des chemins de données comprenant chacun un identifiant d'un point de destination, un paramètre de mode de fonctionnement de l'interface d'émission/réception, un paramètre de protocole de communication sans contact, et un indicateur ouvert/fermé du chemin de données, et
- lorsque des données sont reçues par l'interface d'émission/réception via un canal de transmission de données sans contact, déterminer au moins un point de destination des données en recherchant dans la table de routage un chemin de données ouvert ayant un paramètre de mode de fonctionnement et un paramètre de protocole de communication sans contact correspondant aux paramètres de mode de fonctionnement et de protocole de communication sans contact utilisés par l'interface d'émission/réception pour créer le canal de transmission de données sans contact par l'intermédiaire duquel les données sont reçues.

L'invention concerne également un dispositif de contrôle de l'exécution d'une application dans un système comprenant plusieurs processeurs hôte et une interface d'émission/réception de données sans contact de type NFC, pilotée par un contrôleur.

Selon un mode de réalisation de l'invention, plusieurs chemins de données sont définis dans le système, chaque chemin de données comprenant un point source et un point de destination, chacun des points source et destination étant localisés dans l'un des processeurs hôte ou dans l'interface d'émission/ réception, le contrôle de l'exécution d'une application étant basé sur un contrôle d'un des chemins de données dans lequel des données de l'application sont transmises, le dispositif de contrôle étant configuré pour mettre en oeuvre le procédé tel que défini précédemment.

Selon un mode de réalisation de l'invention, le système comprend au moins un premier processeur hôte exécutant la fonction de contrôle d'application, et au moins un port d'entrée/sortie pour relier l'interface d'émission/réception au processeur hôte, le premier processeur hôte pouvant être un circuit intégré sécurisé tel qu'un circuit intégré de carte SIM.

Selon un mode de réalisation de l'invention, le système comprend au moins un second processeur hôte exécutant l'application.

Selon un mode de réalisation de l'invention, le contrôleur est configuré pour authentifier la fonction de contrôle d'application, avant d'effectuer la demande d'autorisation, l'ouverture du chemin de données n'étant pas autorisée si la fonction de contrôle d'application n'a pas été authentifiée.

Selon un mode de réalisation de l'invention, le contrôleur est configuré pour fournir à la fonction de contrôle d'application une clé de session qui est utilisée ensuite pour chiffrer les données échangées entre le contrôleur et la fonction de contrôle d'application, si la fonction de contrôle d'application a été authentifiée.

Selon un mode de réalisation de l'invention, le contrôleur est configuré pour transmettre des données d'authentification échangées entre la fonction de contrôle d'application et le point source ayant émis la requête d'utilisation du chemin de données, la fonction de contrôle d'application autorisant l'ouverture du chemin de données que si l'authentification a réussi.

Selon un mode de réalisation de l'invention, les données d'authentification échangées entre la fonction de contrôle d'application et le point source ayant émis la requête d'utilisation du chemin de données comprennent un certificat fourni par une autorité de certification à un processeur hôte dans lequel est localisé le point source à authentifier.

Selon un mode de réalisation de l'invention, le contrôleur est configuré pour:
- attribuer au chemin de données un numéro de canal de routage, et mémoriser le numéro de canal de routage et des paramètres de routage comprenant au moins un identifiant du point source et un identifiant du point de destination,
- envoyer au point de destination, des données fournies par le point source en les encapsulant dans une trame ayant un champ d'en-tête comprenant le numéro de canal de routage, et
- sur réception de données encapsulées dans une trame ayant un champ d'en-tête comprenant le numéro de canal de routage, transmettre les données vers le point de destination des données correspondant à l'identifiant du point de destination mémorisé.

Selon un mode de réalisation de l'invention, le contrôleur est configuré pour autoriser ou non l'ouverture d'un chemin de donnée en fonction des paramètres de routage du chemin de données à ouvrir.

Selon un mode de réalisation de l'invention, l'interface d'émission/réception de données sans contact est configurable selon plusieurs modes de fonctionnement et selon plusieurs protocoles de communication sans contact, la fonction de contrôle d'application étant configurée pour autoriser ou non l'ouverture d'un chemin de donnée en fonction du mode de fonctionnement et du protocole de communication du chemin de données à ouvrir.

Selon un mode de réalisation de l'invention, le contrôleur est configuré pour, en réponse à une autorisation d'ouverture de chemin de données entre le point source et désignant un point de destination localisé dans l'interface d'émission/réception de données sans contact, ouvrir un chemin de données entre le point source et le point de destination en configurant l'interface d'émission/ réception pour qu'elle émette des données dans un canal de transmission de données sans contact en utilisant les paramètres de mode de fonctionnement et de protocole de communication sans contact mémorisés pour le chemin de données à ouvrir.

Selon un mode de réalisation de l'invention, le contrôleur est configuré pour ouvrir simultanément plusieurs chemins de données, le numéro de canal de routage et les paramètres de routage de chaque chemin de données ouvert étant mémorisés dans une table de routage, et rechercher dans la table de routage un point de destination des données reçues encapsulées dans une trame, en utilisant le numéro de canal de routage en tant qu'index de sélection du point de destination.

Selon un mode de réalisation de l'invention, la fonction de transmission de données est configurée pour:
- préenregistrer dans une table de routage des chemins de données comprenant chacun un identifiant d'un point de destination, un paramètre de mode de fonctionnement de l'interface d'émission/réception, un paramètre de protocole de communication sans contact, et un indicateur ouvert/fermé du chemin de données, et
- lorsque des données sont reçues par l'interface d'émission/réception via un canal de transmission de données sans contact, déterminer au moins un point de destination des données en recherchant dans la table de routage un chemin de données ouvert ayant un paramètre de mode de fonctionnement et un paramètre de protocole de communication sans contact correspondant aux paramètres de mode de fonctionnement et de protocole de communication sans contact utilisés par l'interface d'émission/réception pour créer le canal de transmission de données sans contact par l'intermédiaire duquel les données sont reçues.

Ces objets, caractéristiques et avantages ainsi que d'autres de la présente invention seront exposés plus en détail dans la description suivante du procédé de l'invention, faite à titre non limitatif en relation avec les figures jointes parmi lesquelles:
- la figure 1 précédemment décrite représente sous forme de bloc une architecture classique de système NFC, et des circuits sans contact avec lesquels le système NFC peut dialoguer,
- la figure 2 précédemment décrite illustre diverses applications d'un système NFC intégré dans un téléphone mobile,
- la figure 3A précédemment décrite représente sous forme de bloc l'architecture classique d'un composant NFC présent dans le système NFC de la figure 1,
- la figure 3B précédemment décrite représente des flux de données traversant le système NFC et correspondant à différentes applications,
- la figure 4 illustre de façon schématique la mise en oeuvre du procédé de routage selon l'invention dans un système NFC,
- les figures 5 à 7 représentent des séquences d'échange de données entre des processeurs du système NFC,
- la figure 8 représente un exemple d'architecture matérielle d'un composant NFC présent dans le système NFC de la figure 4, et
- la figure 9 représente un exemple d'architecture logicielle du composant NFC de la figure 8.

### Premier aspect de l'invention : un procédé de contrôle des chemins de données au sein d'un système NFC

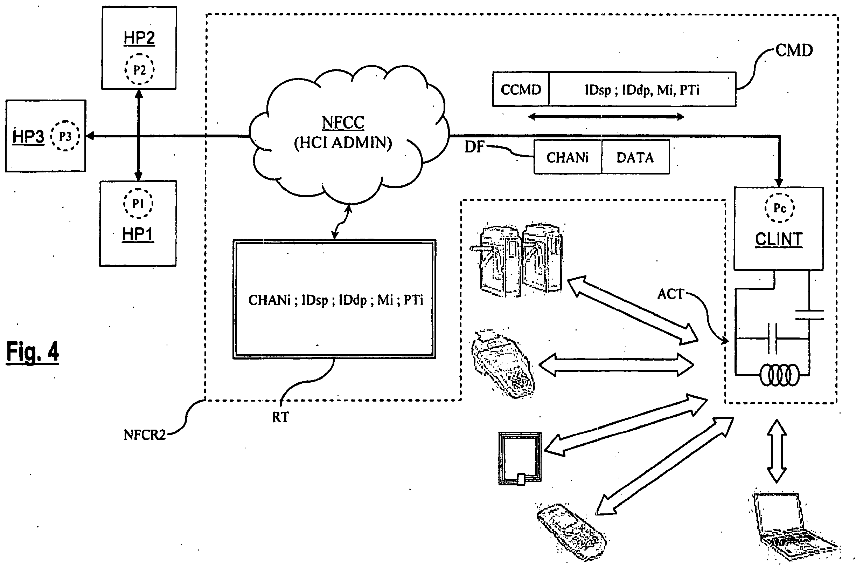

La figure 4 illustre de façon schématique la mise en oeuvre du procédé d'ouverture d'un chemin de donnée selon l'invention. Le procédé est mis en oeuvre dans un système NFC comprenant un composant NFC référencé "NFCR2" et des processeurs hôtes HP1, HP2, HP3. Le composant NFCR2 comprend les mêmes organes que le composant NFCR1 décrit plus haut, notamment un contrôleur NFCC et une interface d'émission/réception de données sans contact CLINT équipée d'un circuit d'antenne ACT. Dans un souci de simplicité, on suppose ici et dans ce qui suit que l'interface CLINT ne peut émettre ou recevoir des données que selon trois protocoles PTi, à savoir le protocole PT1 (ISO 14443-A ou "ISOA"), le protocole PT2 (ISO 14443-B ou "ISOB") et le protocole PT3 (ISO 15693 ou "IS015"). Elle présente par ailleurs les trois modes de fonctionnement Mi susmentionnés, à savoir M1 (Mode "lecteur"), M2 (mode "émulation de carte") et M3 (mode "device").

Des points source ou destination d'un flux de données dans le système NFC sont désignés P1 (point localisé dans le processeur hôte HP1), P2 (point localisé dans le processeur hôte HP2), P3 (point localisé dans le processeur hôte HP3) et Pc (point localisé dans l'interface sans contact CLINT).

Par exemple, le processeur hôte HP1 est le processeur principal du système dans lequel le composant NFC est embarqué. I1 s'agit d'un processeur non sécurisé, c'est-à-dire ne comprenant pas les circuits classiques de cryptographie et d'authentification des processeurs sécurisés. Le processeur hôte HP2 et le processeur hôte HP3 sont ici des circuits sécurisés, tels qu'une carte SIM et une puce de carte bancaire.

Selon un aspect de réalisation de l'invention, l'un des processeurs hôtes sécurisés du système NFC, par exemple HP2, est utilisé pour autoriser ou non l'ouverture d'un chemin de données en fonction de paramètres tels que le protocole PTi, le mode de fonctionnement Mi, et les identifiants des points source et destination du chemin de données.

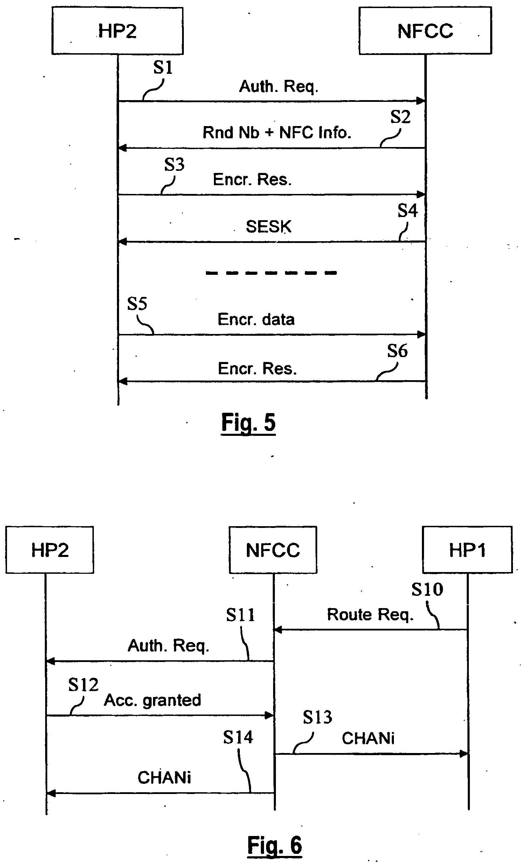

La figure 5 représente différentes étapes d'une séquence d'authentification exécutée par le processeur hôte sécurisé HP2 et le contrôleur NFCC à l'initialisation du système NFC.

Dans une première étape S1, le processeur HP2 émet une requête d'authentification à destination du contrôleur NFCC. A l'étape suivante S2, le contrôleur NFCC répond à la requête en fournissant un nombre aléatoire Rnd Nb et des informations NFC Info. relatives au composant NFC (par exemple un numéro de série, une date de fabrication, ou encore un numéro de version de logiciel). A l'étape suivante S3, le processeur utilise une clé de chiffrement partagée avec le processeur hôte HP2 pour chiffrer le nombre aléatoire reçu, et éventuellement les autres informations reçues, et transmet les données chiffrées au contrôleur NFCC.

A l'étape S4 suivante, le contrôleur NFCC considère que le processeur HP2 est authentifié s'il a réussi à déchiffrer les informations reçues du processeur HP2 à l'aide de la clé de chiffrement qu'il partage avec les processeurs sécurisés autorisés. Si tel est le cas, le contrôleur NFCC transmet au processeur HP2 un message lui notifiant qu'il a été authentifié et contenant une clé de session SESK. Si le processeur HP2 n'est pas authentifié, le contrôleur NFCC refuse toute autre communication avec ce dernier.

Si le processeur HP2 a été authentifié, le contrôleur NFCC et le processeur HP2 peuvent échanger des informations de configuration et de gestion sous une forme chiffrée à l'aide de la clé de session transmise SESK (étapes S5 et S6). Par contre, si le processeur HP2 n'a pas été authentifié par le contrôleur NFCC, le contrôleur refuse systématiquement d'ouvrir des chemins de données.

La création proprement dite d'un chemin de données ou canal de routage est assurée par le contrôleur NFCC en tant qu'administrateur HCI ("HCI ADMIN"). Lorsqu'une commande de création d'un chemin de données est reçue (commande "Création d'une route") et est recevable, le contrôleur NFCC attribue au chemin de données un numéro de canal de routage CHANi, et envoie ensuite un message de confirmation à l'entité ayant émis la commande.

Plus particulièrement, le contrôleur NFCC est utilisé en tant qu'administrateur d'un protocole HCI (Host Computer Interface) selon l'invention qui présente les caractéristiques suivantes:
- l'utilisation de commandes CMD permettant la gestion d'un chemin de données (canal de routage), notamment des commandes d'ouverture et de fermeture de chemins de données, et
- l'utilisation de trames de données DF comprenant un champ d'en-tête de longueur réduite et un champ de données (DATA), le champ d'en-tête comportant un numéro de canal de routage CHANi.

Des exemples de commandes de routage ainsi que des exemples de trames de données sont décrits en Annexe 1 qui fait partie intégrante de la description. Toutes les commandes pouvant être prévues ne seront pas décrites ici, dans un souci de simplicité. L'Annexe 1 décrit des commandes essentielles de création de route, de modification de route et de suppression de route, et les réponses à de telles commandes (messages de confirmation ou d'erreur). L'Annexe 1 décrit également le format des trames de données DF, qui présente avantageusement un champ d'en-tête de taille réduite ne comprenant que 8 bits.

Les commandes d'ouverture, de fermeture ou de modification d'un chemin de données sont émises par l'un des processeurs hôtes HP1, HP2 ou par l'interface CLINT et sont traitées par le contrôleur NFCC. Ces commandes spécifient le mode de fonctionnement Mi et le protocole PTi de l'interface CLINT pour le chemin de données concerné. Si l'ouverture d'un chemin de données est demandée par l'un des processeurs hôtes HP1 ou HP2, le mode Mi et le protocole PTi figurant dans la commande sont utilisés par le contrôleur NFCC pour configurer l'interface CLINT en ce qui concerne le canal de communication sans contact que l'interface CLINT doit créer pour émettre les données qui seront reçues via le chemin de données. Si l'ouverture d'un chemin de données est demandée par l'interface CLINT, le mode de fonctionnement Mi et le protocole PTi spécifiés dans la commande émise par l'interface CLINT sont informatifs et précisent les conditions de mode de fonctionnement et de protocole dans lesquelles l'interface CLINT a reçu les données qu'elle veut transmettre dans le chemin de données.

Il est à noter qu'une commande de transmission de données par un chemin de données non ouvert peut également déclencher une procédure d'ouverture du chemin de données avec demande d'autorisation préalable.

La figure 6 représente des étapes S10, S11, S12, S13, S14 d'une séquence générale d'ouverture d'un chemin de données. Cette séquence ne peut être exécutée que si le contrôleur NFCC a préalablement authentifié le processeur hôte HP2.

A l'étape S10, un processeur hôte, par exemple HP1, demande au contrôleur NFCC l'autorisation d'ouvrir un chemin de données. A cet effet, le processeur HP1 fournit des informations relatives au chemin de données à ouvrir. Ces informations comprennent notamment le protocole et le mode de transmission du chemin de données à ouvrir, ainsi que des informations d'identification relatives aux points source et destination du chemin de données.

A l'étape S11, le contrôleur NFCC demande l'autorisation d'ouvrir le chemin de données au processeur HP2. En fonction des informations reçues relatives au chemin à ouvrir, le processeur HP2 autorise ou non l'ouverture demandée du chemin. Par exemple, dans certains modes de fonctionnement, le processeur HP2 peut autoriser ou refuser systématiquement l'ouverture d'un chemin de données.

A l'étape S12, le processeur HP2 autorise l'ouverture du chemin de données en fournissant un identifiant de canal CHANi au contrôleur NFCC. Aux étapes S13 et S14 suivantes, l'identifiant de canal attribué au chemin de données est fourni par le contrôleur NFCC aux processeurs HP1 et HP2. Si l'ouverture du chemin de données demandée est refusée, le processeur HP2 le notifie au contrôleur NFCC qui envoie alors un message de refus d'ouverture de canal au processeur HP1.

Ainsi, grâce à l'invention, la conduite de toute application correspondant à un chemin de données déterminé est contrôlable au moyen du (ou d'un) processeur sécurisé. Par exemple, des applications nécessitant l'utilisation du processeur hôte non sécurisé HP1 (par exemple des applications de lecture sans contact de fichier vidéo dans des lieux de vente publics, nécessitant la puissance de calcul du processeur HP1), peuvent être contrôlés par les fournisseurs d'accès. Il en est de même pour les applications gérées par un processeur comme le processeur HP3 qui, bien qu'étant sécurisé, n'est pas dévolu au contrôle de la sécurité au sein du système NFC et se voit donc soumis à l'arbitrage du processeur sécurisé HP2.

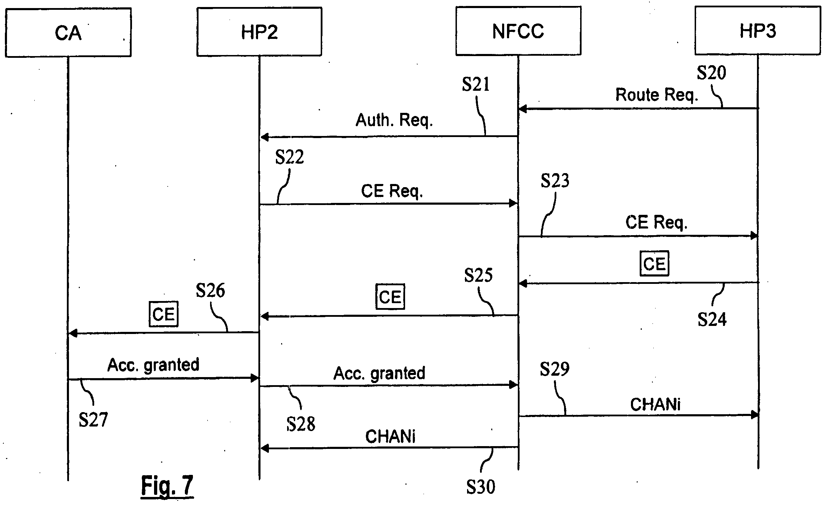

La figure 7 représente un autre exemple de séquence d'ouverture d'un chemin de données selon l'invention, comprenant des étapes S20 à S30. La séquence représentée sur la figure 7 fait intervenir un certificat CE fourni par une autorité de certification CA. Cette séquence est adaptée en particulier aux services dont l'accès est payant.

Comme précédemment décrit, le processeur HP3 émet une requête d'ouverture d'un chemin de données (étape S20). Cette requête est transmise par le contrôleur NFCC au processeur HP2 (étape S21). Le processeur HP2 émet en réponse une demande de certificat (étape S22), cette demande étant retransmise par le contrôleur NFCC au processeur émetteur de la requête d'ouverture de chemin de données, à savoir le processeur HP3 (étape S23). A l'étape suivante S24, le processeur HP3 émet en réponse le certificat CE demandé qui est retransmis successivement par le contrôleur NFCC (étape S25), puis par le processeur HP2 à l'autorité de certification CA (étape S26). La liaison de communication entre l'autorité CA et le processeur HP2 dépend de la nature du système NFC ou du système auquel le système NFC est connecté. Si le système est un téléphone mobile, la liaison peut être établie dans un réseau mobile tel que GSM.

A l'étape S27 suivante, l'autorité de certification reconnaît ou non l'authenticité du certificat CE reçu. Si le certificat reçu est authentique, elle transmet au processeur HP2 un message indiquant que l'accès demandé est autorisé et indique le cas échéant un montant à payer pour l'accès demandé. A l'étape S28 suivante, le processeur HP2 informe le contrôleur NFCC que l'ouverture de chemin de données demandée est autorisée. Le contrôleur NFCC fournit alors un numéro de canal CHANi au processeur HP3 (étape S29) et au processeur HP2 (étape S30).

La séquence illustrée par la figure 7 est applicable par exemple, à l'achat par un utilisateur de l'accès à un service. Le processeur HP2 autorise la création d'un chemin de données entre l'interface CLINT et le processeur HP1 quand l'interface CLINT reçoit des données en mode "device" ISO B.

Il est à noter que toutes les informations échangées entre le contrôleur NFCC et le processeur HP3 peuvent être chiffrées à l'aide de la clé de session transmise à l'étape S4 (figure 5).

Il n'est pas nécessaire que le processeur HP2 s'adresse à une autorité de certification. Dans.certaines applications, le processeur HP2 peut disposer de moyens propres pour vérifier un certificat. Avant d'autoriser l'ouverture d'un chemin, on peut également prévoir que le processeur HP2 authentifie le processeur HP3 en vérifiant que les processeurs HP2 et HP3 partagent une même clé secrète (étapes S2 à S4 de la figure 5).

Grâce à ces dispositions, un opérateur qui attribue des cartes SIM à des utilisateurs peut ainsi contrôler l'accès à des services à l'aide du système, et ce d'une manière indépendante des opérateurs qui fournissent les services.

Alternativement, l'authentification du processeur hôte HP3 par le processeur hôte HP2 peut être effectuée au préalable, par exemple lors de l'initialisation du système. Le processeur hôte HP2 n'autorise ensuite l'ouverture d'un chemin de données que si le processeur hôte émetteur de la requête d'ouverture a été préalablement authentifié.

Le contrôle de chemin de données pour mettre en oeuvre cet aspect de l'invention peut être fait par tout moyen classique, par exemple en utilisant des circuits de multiplexage ou des portes logiques contrôlés par des signaux fournis par le processeur NFC sur autorisation du processeur sécurisé. On décrira toutefois dans ce qui suit un procédé de routage permettant un contrôle simple, rapide et efficace des chemins de données, formant un second aspect de l'invention indépendant du premier mais pouvant être avantageusement utilisé pour mettre en oeuvre le premier aspect.

### Second aspect de l'invention: utilisation d'une table de routage pour le routage de données

Selon un aspect de l'invention, le contrôleur NFCC du composant NFC assure en outre la gestion d'une table de routage RT dans laquelle sont enregistrés des chemins de données, chaque chemin de données étant identifié par un numéro de canal de routage CHANi.

Les chemins de données enregistrés dans la table de routage sont différentiés les uns des autres au moins par les paramètres suivants:
CHANi; IDsp; IDdp, Mi, PTi
CHANi étant le numéro de canal de routage attribué au chemin de données, IDsp un identifiant du point source du chemin de données, IDdp un identifiant du point de destination du chemin de données, Mi et PTi étant le mode de fonctionnement et le protocole de communication sans contact utilisé par l'interface CLINT pour émettre ou recevoir des données via un canal de transmission de données sans contact.

A chaque fois que le contrôleur NFCC attribue un numéro de canal de routage CHANi à un chemin de données, il inscrit dans la table de routage RT les paramètres IDsp, IDdp, Mi, PTi indiqués dans la commande.

Un exemple de table de routage créée par le contrôleur NFCC est décrit par le tableau 1 en Annexe 2, qui fait partie intégrante de la description. Cette table de routage est créée après réception d'une série dé commandes d'ouverture de route ayant des points sources localisés dans l'un des processeurs HP1 ou HP2 (soit un point source P1 ou P2). Optionnellement, le contrôleur peut définir un point de destination secondaire destiné à recevoir une copie des données circulant dans le chemin de données. Le point de destination secondaire ou point de notification est déterminé par le contrôleur à partir d'une table de notification (non représentée sur les figures) qui lui indique les chemins de données pour lesquels les données doivent être notifiées à l'autre processeur hôte. Bien que présentée de façon statique dans le tableau 1, la table de routage est dynamique et est mise à jour en temps réel en fonction des commandes de création, de modification ou de suppression reçues par le contrôleur NFCC.

Dans une variante de réalisation, la table de routage est statique et a été préenregistrée par le contrôleur NFCC, par exemple à la demande de l'un des processeurs hôtes et à la mise sous tension du système. Le tableau 2 en Annexe 2 décrit un exemple de table de routage préenregistrée ayant comme points sources les points P1, P2 ou P3 localisés dans les processeurs hôtes HP1, HP2, HP3. Le numéro de canal CHANi peut également être préenregistré dans la table pour chaque configuration de routage envisageable. Dans une telle table préenregistrée, un champ "occupé" et "ouvert" ou autorisé est prévu dans chaque ligne de la table (une ligne correspondant à un canal de routage). Le contrôleur NFCC inscrit la valeur "1" dans le champ "ouvert" lorsqu'il ouvre le chemin de données correspondant, et inscrit la valeur "0" en réponse à une commande de fermeture du chemin de données. Lorsqu'un chemin de données est utilisé, le contrôleur NFCC inscrit la valeur "1" dans le champ "utilisé".

La transmission des données reçues dans les trames de données est également sous le contrôle du contrôleur NFCC, qui se réfère à la table de routage pour déterminer les points de destination de ces données. Avantageusement, comme cela apparaît dans le format des trames de données décrites en Annexe 1, il n'est pas nécessaire que le point source qui envoie les données au processeur spécifie tous les paramètres du canal de routage utilisé : le champ d'en-tête de la trame de données comprend simplement des bits de paramétrage T et L et 6 bits de numéro de canal (permettant de router simultanément 63 chemins de données, le canal "0" étant réservé à l'administration du protocole HCI).

Ainsi, sur réception d'une trame de données, le contrôleur NFCC renvoie les données au point de destination désigné dans la table de routage, en utilisant le numéro de canal en tant qu'index pour trouver ce point de destination dans la table de routage (ainsi qu'éventuellement le point de notification). Si le point de destination est le point Pc (interface CLINT), le contrôleur NFCC assure le paramétrage de l'interface CLINT pour que celle-ci envoie les données dans un canal de transmission de données sans contact conforme aux informations de protocole sans contact PTi et de mode de fonctionnement Mi figurant dans la table de routage. Dans une variante de réalisation, l'interface CLINT assure elle-même son paramétrage en lisant la table de routage lorsque des données sont reçues dans une trame de données (ce qui nécessite qu'une partie des attributions du contrôleur NFCC soit transférée dans l'interface CLINT).

Ainsi, un autre avantage de la présente invention est que la table de routage permet le paramétrage de l'interface CLINT sans qu'il soit nécessaire d'inclure les paramètres de mode de fonctionnement Mi et de protocole de communication sans contact PTi dans les en-têtes des trames de données. La table de routage selon l'invention n'est donc pas une simple table de routage au sens conventionnel du terme, mais forme également une table de paramétrage.

Le tableau 3 en Annexe 2 décrit un exemple de table de routage dynamique comprenant des chemins de données créés à la demande de l'interface CLINT (ayant Pc comme point source). Comme on l'a indiqué au préambule, le problème que pose le routage de données entrantes (données reçues via un canal de communication sans contact) est que l'interface CLINT ainsi que le contrôleur NFCC ne savent pas nécessairement quel est le processeur hôte destinataire de ces données. En conséquence, la table de routage créée ici par le contrôleur NFCC à la demande de l'interface CLINT indique que les données doivent être envoyées aux deux points de destination P1, P2, P3 localisés dans les processeurs hôtes HP1, HP2, HP3, à charge au processeur hôte qui n'est pas concerné par les données de ne pas y répondre et de laisser l'autre processeur hôte envoyer à l'interface CLINT des données de réponse.

Il sera noté ici que les chemins de données créés à la demande de l'un des processeurs hôtes HP1, HP2, HP3 ou à la demande de l'interface CLINT sont de préférence bidirectionnels. Ainsi, par exemple, une fois qu'un chemin de données a été créé par un point P1 localisé dans le processeur HP1, pour émettre des données dans un canal de communication sans contact définit par le paramètre de mode M2 et le protocole PT2, toutes les données reçues par l'interface CLINT dans le mode M2 et suivant le protocole PT2 seront envoyées dans ce chemin de données et seront donc reçues par le point P1. L'homme de l'art notera également que la prévision de chemins de données bidirectionnels impose une gestion des. conflits éventuels, en interdisant que deux chemins bidirectionnels ayant des points source et/ou destination différents utilisent les mêmes paramètres de mode Mi et de protocole PTi pour l'interface CLINT. Par exemple, la table de routage décrite par le tableau 1 représente des chemins de données qui ne peuvent coexister (par exemple canal 1 et canal 9, ces chemins de données n'étant décrits dans le même tableau qu'à titre illustratif).

### Troisième aspect de l'invention : routage des données entrantes en fonction des paramètres de mode et de protocole de l'interface sans contact

Lorsque des données entrantes sont reçues, l'interface d'émission/réception de données sans contact CLINT ainsi que le contrôleur NFCC ne savent pas nécessairement quel est le processeur hôte destinataire de ces données. En conséquence, dans l'art antérieur, les données sont envoyées aux deux processeurs, à charge au processeur qui n'est pas concerné par les données de ne pas y répondre.

La demande WO 2004/029860 propose un procédé de routage qui consiste à utiliser, comme moyen de routage de données entrantes, le champ APDU (Application Protocol Data Unit) se trouvant dans des commandes reçues via le canal de transmission de données sans contact. Toutefois, comme indiqué en page 13 de cette demande, ce procédé nécessite que de nouveaux protocoles soient développés pour mettre en oeuvre le routage, ce qui signifie que l'organe externe émettant les données dans le canal de transmission de données sans contact doit spécifier à quel organe interne (quel processeur hôte) les données sont destinées.

Or, dans de nombreuses applications, l'organe externe émettant des données n'est pas conçu pour donner des indications de routage permettant de savoir quel est le processeur destinataire de ces données. En effet le routage est un problème interne lié au fait que plusieurs processeurs d'un même système NFC partagent la même interface d'émission/réception de données sans contact. Il est donc peu probable qu'un protocole de routage universel soit intégré dans un proche avenir dans des dispositifs ne répondant pas à une norme NFC. Par exemple, un lecteur conventionnel utilisé pour du paiement ou du contrôle d'accès envoie des commandes d'authentification et/ou de vérification de code secret qui s'adressent à des cartes à puce sans contact. Au cours d'une authentification, un tel lecteur ne sait donc pas s'il s'adresse à une vraie carte sans contact ou à un composant NFC en mode émulation de carte. Par conséquent, un tel lecteur n'est pas conçu pour émettre des paramètres permettant le routage, à l'intérieur du système NFC, des données d'application qu'il envoie.

Ainsi, l'invention vise ici un moyen permettant de déterminer le processeur hôte destinataire de données entrantes reçues via le circuit d'interface CLINT.

La présente invention se base ici sur deux constatations :
1) le ou les processeurs hôtes présents dans un système NFC sont "spécialisés" dans certaines applications ou types d'application en raison de leur nature (sécurisé ou non, processeur de carte SIM ou processeur Baseband), de leur puissance de traitement et des organes de traitement qu'ils comportent,
2) parmi les diverses applications qu'un système NFC peut être amené à gérer, chaque application ou type d'application correspond généralement à un mode de fonctionnement déterminé de l'interface d'émission/réception de données sans contact CLINT et à un protocole de communication sans contact déterminé (PT1, PT2, PT3...).

En conséquence, une combinaison d'un mode de fonctionnement Mi de l'interface CLINT et d'un protocole PTi peut correspondre à un type d'application qui est destiné à être géré par un processeur hôte particulier. Cela apparaît sur la figure 1 où l'on voit que des applications sécurisées AP2 en mode émulation sont généralement gérées par une carte SIM (processeur HP2), alors que des applications non sécurisées du type AP3 (par exemple transfert de fichier en point à point) sont préférentiellement gérées par le processeur Baseband en raison de sa puissance de traitement plus élevé et de l'absence de sécurisation du transfert. Par ailleurs, les applications sécurisées en mode émulation reposent généralement sur les protocoles ISOA et ISOB, tandis que le mode ISO 15693, offrant une plus grande distance de communication, est préférentiellement destiné à des applications non sécurisées générées par le processeur hôte HP1 et non par le processeur HP2 si celui-ci est une carte SIM.

Ainsi, selon l'invention, on prédéfinit des règles de routage de données entrantes en fonction du mode de fonctionnement Mi de l'interface CLINT et du protocole de communication sans contact PTi suivant lequel les données sont reçues. Les règles de routage prédéterminées sont par exemple les suivantes (exemples donnés à titre non limitatif) :
- quand l'interface CLINT reçoit des données en mode lecteur ISO A, les données sont envoyées prioritairement au processeur hôte HP1 et sont notifiées au processeur hôte HP2,
- quand l'interface CLINT reçoit des données en mode lecteur ISO B, les données sont envoyées prioritairement au processeur hôte HP1 et sont notifiées au processeur hôte HP2,
- quand l'interface CLINT reçoit des données en mode lecteur ISO 15693, les données sont envoyées prioritairement au processeur hôte HP2 et ne sont pas notifiées au processeur hôte HP1,
- quand l'interface CLINT reçoit des données en mode émulation carte ISO A, les données sont envoyées prioritairement au processeur hôte HP2 et ne sont pas notifiées au processeur hôte HP1,
- quand l'interface CLINT reçoit des données en mode émulation carte ISO B vers processeur hôte HP1, les données sont envoyées prioritairement au processeur hôte HP1 et ne sont pas notifiées au processeur hôte HP2,
- quand l'interface CLINT reçoit des données en mode émulation carte ISO 15693, les données sont seulement notifiées au processeur hôte HP2 et ne sont ni envoyées ni notifiées au processeur hôte HP1,
- quand l'interface CLINT reçoit des données en mode "device" ISO A (appariement géré par le processeur hôte HP1), les données sont envoyées prioritairement au processeur hôte HP1 et sont notifiées au processeur hôte HP2,
- quand l'interface CLINT reçoit des données en mode "device" ISO B, les données sont bloquées (aucune action),
- quand l'interface CLINT reçoit des données en mode "device" ISO 15693 (appariement géré par le processeur hôte HP1), les données sont envoyées prioritairement au processeur hôte HP1 et sont notifiées au processeur hôte HP2.

Cet ensemble de règles permet de définir une table de routage des données entrantes, telle que décrite par le tableau 4 en Annexe 2. Cette table de routage est statique et est préenregistrée par le contrôleur NFCC, par exemple à la demande du processeur sécurisé HP2 et à la mise sous tension du système NFC. Cette table est bien entendu susceptible de modification en temps réel.

L'homme de l'art notera que le second aspect de l'invention est indépendant du premier, dans la mesure où le routage des données entrantes suivant le procédé qui vient d'être décrit peut être mis en oeuvre en utilisant un protocole HCI classique, c'est-à-dire sans utilisation d'une table de routage et de trames de données ayant un champ d'en-tête de longueur réduite.

### Exemple d'architecture matérielle et logicielle du composant NFC permettant de mettre en oeuvre le procédé selon l'invention

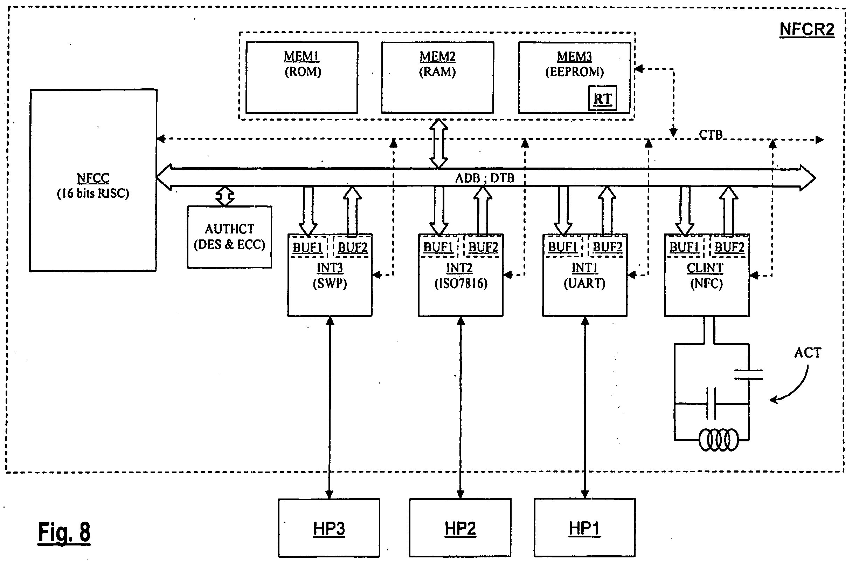

La figure 8 représente un exemple d'architecture matérielle du composant NFCR2 de la figure 4. Le composant comprend :
- le contrôleur NFCC et l'interface CLINT déjà décrits,
- un plan mémoire comprenant une mémoire programme MEM1 de type ROM (mémoire morte), une mémoire de données MEM2 de type RAM (mémoire vive), et une mémoire effaçable et programmable électriquement MEM3 de type EEPROM dans laquelle la table de routage RT est enregistrée,
- un circuit d'authentification et de correction d'erreur AUTHCT comprenant des algorithmes DES (Data Encryption Standard) et ECC (Elliptic Curve Cryptography), ou d'autres algorithmes de cryptographie,
- un port de connexion INT1 de type UART (Universal Asynchronous Receiving Transmitting), auquel le processeur hôte HP1 est ici connecté,
- un port de connexion INT2 de type ISO7816 auquel le processeur hôte HP2 est ici connecté (le processeur HP2 étant supposé ici être une carte SIM),
- un port de connexion INT3 de type SWP (Single Wire Protocol) permettant de connecter le processeur hôte HP3,
- un bus de données DTB et un bus d'adresse ADB reliant le plan mémoire, le contrôleur NFCC, l'interface CLINT et les ports INT1, INT2, INT3, et
- un bus de contrôle CTB permettant au contrôleur NFCC de contrôler et d'accéder à ces divers éléments en lecture et/ou écriture.

L'interface CLINT et les ports INT1, INT2, INT3 comportent chacun un tampon d'entrée BUF1 à entrée parallèle et un tampon de sortie BUF2 à sortie parallèle accessible en écriture, respectivement en lecture, via le bus de données et le bus d'adresse. L'échange de données formant les commandes de routage ou les trames de données entre les processeurs hôtes HP1, HP2, HP3 et le contrôleur NFCC ou l'interface CLINT s'effectue ainsi par blocs de données de la taille des tampons BUF1, BUF2, et est cadencé par le contrôleur NFCC.

Il est à noter que la table de routage n'est accessible que par le contrôleur NFCC. Par conséquent, la table de routage ne peut être modifiée que si le processeur hôte HP2 est authentifié par le contrôleur NFCC.

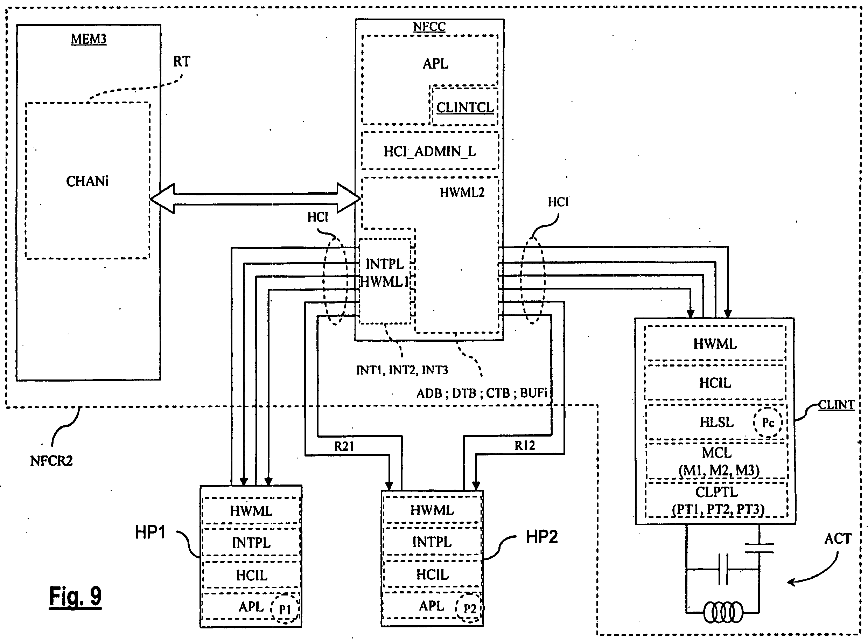

La figure 9 représente un exemple d'architecture logicielle du composant NFCR2 et des processeurs hôtes HP1, HP2. Cette architecture logicielle comprend, pour le composant NFC et les processeurs hôte du système, plusieurs couches logicielles allant du niveau le plus bas (couche liaison de données) au niveau le plus haut (couche application). La représentation qui est faite de ces couches logicielles en figure 9 est simplifiée par rapport à l'architecture logicielle réelle d'un système NFC selon l'invention mais est suffisante pour l'homme de l'art souhaitant réaliser l'invention de la manière proposée ici.

Chaque processeur hôte HP1, HP2 comprend au moins quatre couches logicielles, dans un ordre de niveau croissant :
- une couche de plus bas niveau HWML (Hardware Management Layer) qui gère le fonctionnement des éléments matériels (hardware) permettant aux processeurs hôtes d'échanger des données avec le contrôleur NFCC. Il s'agit par exemple de la couche de gestion de l'interface UART pour le processeur HP1 et de la couche de gestion de l'interface ISO7816 pour le processeur HP2.
- une couche INTPL (Interface Protocol Layer) qui gère le protocole des ports de communication INT1, INT2, INT3. Il s'agit par exemple de la couche de gestion du protocole UART pour le processeur HP1 et de la couche de gestion du protocole ISO7816 pour le processeur HP2.
- une couche HCIL (HCI Layer) qui gère le protocole HCI selon l'invention, c'est-à-dire qui gère la création d'un canal de communication en générant les commandes décrites plus haut et en Annexe1 et en traitant les messages de réponse à de telles commandes. Cette couche repose sur les couches INTPL et HWML qui sont quasi transparentes pour elle.
- une couche APL (Application Layer) de haut niveau qui gère les applications RFID telles que celles représentées en figures 2 et 4 (lecture d'une carte à puce ou d'une étiquette électronique, émulation d'une carte à puce, dialogue en mode "device-to-device" avec un processeur externe pour échanger des fichiers, etc..). Cette couche peut comprendre plusieurs programmes application, chacun étant sécurisé ou non (selon les ressources internes du processeur) et chacun utilisant tel type de protocole PTi et tel mode de fonctionnement Mi de l'interface CLINT. Ainsi, cette couche de haut niveau repose sur les couches HWML, INTPL et la couche HCIL selon l'invention, qui sont quasi transparentes pour elle. La rapidité du transfert des données à travers les chemins de données crées grâce à la couche HCIL selon l'invention entraîne avantageusement un accroissement sensible des performances de la couche application APL.

Selon un autre aspect avantageux de l'invention, les points source ou destination P1 et P2 localisés dans les processeurs hôtes sont des "services" (des applications déterminées). Ces services peuvent demander au contrôleur NFCC, chacun indépendamment de l'autre, de créer des chemins de données pour utiliser simultanément l'interface CLINT (sous réserve de collision de modes et de protocoles, comme indiqué plus haut). Ainsi, cette architecture logicielle permet de mettre en oeuvre un service en tant que points source ou destination d'un chemin de données, et permet la création simultanée de plusieurs chemins de données entre deux entités, par exemple entre deux processeurs hôtes ou entre un processeur hôte et l'interface d'émission/réception de données sans contact.

De façon sensiblement similaire, le contrôleur NFCC comporte les couches logicielles suivantes :
- deux couches HWML1 et INTPL du même type que les couches HWML et INTPL présentes dans les processeurs hôtes. Dans un souci de simplification du schéma, ces couches sont représentées dans le contrôleur NFCC mais sont en réalité localisées dans les ports INT1 et INT2, qui sont considérés comme faisant partie du contrôleur, ainsi que les bus ADB, DTB, CTB. En effet le traitement des protocoles UART et 7816 est assuré ici dans les ports INT1, INT2, qui mettent à la disposition du contrôleur leurs tampons d'entrée et de sortie BUF1, BUF2 via les bus ADB, DTB, CTB.
- une autre couche de bas niveau HWML2 qui permet au contrôleur d'écrire les tampons BUF1 et de lire les tampons BUF2, via les bus ADB, DTB, CTB, en décomposant les trames de données ou les commandes en blocs de données de même taille que les tampons.
- une couche HCI-ADMIN-L ou couche d'administration du protocole HCI, qui dialogue avec les couches HCIL des processeurs hôtes HP1, HP2 en tant qu'administrateur du routage. Ainsi cette couche exécute les tâches d'attribution de chemins de données décrites plus haut, et accède à la table de routage RT en lecture et en écriture via la couche de bas niveau HWML2.
- une couche CLINTCL (Contactless Interface Control Layer) qui gère l'interface CLINT et qui indique à cette dernière le mode Mi dans lequel elle doit se placer et le protocole PTi à utiliser pour émettre des données dans un canal de communication sans contact. A cet effet, la couche CLINTCL exploite les paramètres PTi et Mi présents dans la table de routage. Plus particulièrement, la couche HCI-ADMIN-L écrit ces paramètres dans la table de routage en réponse à des commandes d'ouverture de chemins de données, tandis que la couche CLINTCL recherche ces paramètres dans la table en utilisant comme index le numéro de canal des trames de données envoyées par les processeurs hôtes HP1, HP2. Cette couche contrôle également l'interface CLINT en mode réception de données sans contact et lui demande cycliquement d'effectuer un balayage des modes (mode lecteur, mode émulation et mode "device") et, dans chaque mode, de rechercher des données entrantes. Cela signifie que l'interface CLINT émet à intervalles réguliers un champ magnétique pour interroger d'éventuelles cartes ou étiquettes sans contact (ou autres objets portatifs fonctionnant sans contact) qui pourraient être présentes dans son champ d'interrogation. L'interface CLINT se place également à intervalles réguliers dans un mode d'écoute (mode "émulation") pour détecter si un lecteur en mode actif envoie des messages d'interrogation.
- une couche optionnelle APL qui peut gérer elle-même des applications, à l'instar des processeurs hôtes. En effet, bien que cela n'ait pas été décrit jusqu'à présent pour rester dans l'objet de l'invention, des applications peuvent également être prises en charge par le composant NFC lui-même. Dans ce cas, la communication de données entre le contrôleur NFCC et l'interface CLINT peut être faite en passant par le canal de communication HCI selon l'invention, si l'interface CLINT est équipée de la couche INTPL, ce qui est le cas dans le mode de réalisation représenté en figure 9.

Enfin, l'interface CLINT comporte les couches logicielles suivantes:
- du côté du contrôleur NFCC, une couche de bas niveau HWML équivalente à la couche HWML2 du contrôleur NFCC, pour gérer les tampons de données BUF1, BUF2 via les bus ADB, DTB, CTB.
- une couche HCIL (comme indiqué ci-dessus) qui rend l'interface CLINT compatible avec le protocole HCI selon l'invention et offre de plus grandes possibilités d'implémentation de l'invention (notamment le fait que l'interface CLINT génère elle-même les trames de données pour envoyer aux processeurs hôtes des données reçues via un canal de communication sans contact).
- du coté du circuit d'antenne ACT, des couches CLPTL (Contactless Protocol Layer) et MCL (Mode Control Layer) qui assurent le contrôle ou le traitement des signaux électriques appliqués au circuit d'antenne ACT ou reçus par celui-ci, pour la mise en oeuvre des modes de fonctionnement M1, M2, M3 et des protocoles PT1, PT2, PT3.
- entre les couches situées du coté du contrôleur et les couches situées du coté du circuit d'antenne, une couche centrale de haut niveau HLSL (High Level Service Layer) qui permet de définir dans l'interface CLINT plusieurs points source ou destination Pc pour créer plusieurs chemins de données avec des points P1, P2 multiples dans les couches application APL des processeurs hôtes HP1, HP2. Bien entendu, cette architecture de haut niveau est optionnelle et des points multiples Pc localisés virtuellement dans l'interface CLINT peuvent être gérés par le contrôleur NFCC.

Il apparaîtra clairement à l'homme de l'art que la présente invention est susceptible de diverses variantes de réalisation. Ainsi l'invention n'est pas limitée à un système comportant plusieurs processeurs hôtes et un composant NFC. Elle couvre également le contrôle de l'exécution d'applications dans un système ayant un seul processeur hôte et exécutant plusieurs applications amenées à communiquer entre elles.

Par ailleurs, il n'est pas indispensable que le processeur HP2 dédié au contrôle d'application soit sécurisé. En effet, certaines applications non sensibles peuvent ne pas requérir un niveau de sécurité élevé.

D'autre part, les formats des commandes sont décrits ici uniquement à titre d'exemple. En particulier, le bit "T" peut être supprimé pour obtenir 128 canaux de routage au lieu de 64 tout en conservant un champ d'entête de 8 bits. De même, le format de la table de routage est fourni à titre d'exemple, la table pouvant être gérée dynamiquement ou statiquement, ou les deux à la fois.

### Annexe 1 faisant partie intégrante de la description

### A/ Exemples de commandes de routage

### Format général

| | En-tête | | | Paramètres |
|---|---|---|---|---|
| Taille | 1 bit | 1 bit | 6 bits | 2 ou 3 octets |
| Signifie ou contient | T | L | CCMD | Selon commande |
| Valeur | 1 | 0-1 | 0-31 | |

| | | | | |
|---|---|---|---|---|
| T = Type T = 1 pour une commande ou une réponse à une commande L = longueur du champ "paramètres" : 2 octets si L = 0 ou 3 octets si L = 1 CCMD = code de la commande ou du message | | | | |

### Exemples de commandes et de messages de réponse:

### Commande "Création d'une Route":

| | En-tête | | | Paramètres | | | |
|---|---|---|---|---|---|---|---|
| Taille | 1 bit | 1 bit | 6 bits | 1 octet | 1 octet | 4 bits | 4 bits |
| Signifie ou contient | T | L | CCMD | IDsp | IDdp | Mi | PTi |
| Valeur | 1 | 1 | VAL1 | 0-255 | 0-255 | 0-15 | 0-15 |

| | | | | | | | |
|---|---|---|---|---|---|---|---|
| VAL1 = valeur du code de la commande IDsp = Identifiant du point source de la commande IDdp = Identifiant du point de destination de la route Mi = mode de fonctionnement de l'interface d'émission/réception de données sans contact (M1, M2 ou M3) PTi = protocole de communication sans contact (PT1, PT2 ou PT3). | | | | | | | |

### Message "Création Route OK"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | **CHANi** | RFU |
| Valeur | 1 | 0 | VAL2 | 0-255 | 0-63 | 0-3 |

| | | | | | | |
|---|---|---|---|---|---|---|
| VAL2 = valeur du code de la réponse IDsp = Identifiant du point source de la commande CHANi = Numéro de la route attribuée (Numéro de Canal) RFU = Réservé pour utilisation future | | | | | | |

### Message "Erreur de Création Route"

| | En-tête | | | Paramètres | |
|---|---|---|---|---|---|
| Taille | 1 bit | 1 bit | 6 bits | 1 octet | 1 octet |
| Signifie ou contient | T | L | CCMD | IDsp | IDdp |
| Valeur | 1 | 0 | VAL3 | 0-255 | 0-255 |

| | | | | | |
|---|---|---|---|---|---|
| VAL3 = valeur du code du message IDsp = Identifiant du point source de la commande IDdp = Identifiant du point de destination de la route Mi = mode de fonctionnement de l'interface d'émission/réception de données sans contact (M1, M2 ou M3) PTi = protocole de communication sans contact (PT1, PT2 ou PT3) | | | | | |

### Commande "Modification de Route" ou "Suppression de Route"

| | En-tête | | | Paramètres | | | | |
|---|---|---|---|---|---|---|---|---|
| Taille | 1 bit | 1 bit | 6 bits | 1 octet | 6 bits | 2 bits | 4 bits | 4 bits |
| Signifie ou contient | T | L | CCMD | IDsp | **CHANi** | RFU | Mi | PTi |
| Valeur | 1 | 1 | VAL4 ou VAL5 | 0-255 | 0-63 | 0-3 | 0-15 | 0-15 |

| | | | | | | | | |
|---|---|---|---|---|---|---|---|---|
| VAL4 ou VAL5 = valeur du code de chaque commande IDsp = Identifiant du point source de la commande CHANi = Numéro de la route à modifier ou supprimer RFU = Réservé pour utilisation future Mi = mode de fonctionnement de l'interface émission/réception de données sans contact (M1, M2 ou M3) PTi = protocole de communication sans contact (PT1, PT2 ou PT3) | | | | | | | | |

### Messages "Modification de Route OK " ou "Suppression de Route OK"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | CHANi | RFU |
| Valeur | 1 | 0 | VAL6 ou VAL7 | 0-255 | 0-63 | 0-3 |

| | | | | | | |
|---|---|---|---|---|---|---|
| VAL6 ou VAL 7 = valeur du code de chaque message IDsp = Identifiant du point source de la commande CHANi = Numéro de la route modifiée ou supprimée RFU = Réservé pour utilisation future | | | | | | |

### Messages "Erreur de Modification de Route" ou "Erreur de Suppression de Route"

| | En-tête | | | Paramètres | | |
|---|---|---|---|---|---|---|
| Taille | 1 bit | 1 bit | 6 bits | 1 octet | 6 bits | 2 bits |
| Signifie ou contient | T | L | CCMD | IDsp | CHANi | RFU |
| Valeur | 1 | 0 | VAL8 ou VAL9 | 0-255 | 0-63 | 0-3 |

| | | | | | | |
|---|---|---|---|---|---|---|
| VAL8 ou VAL 9 = valeur du code de chaque message IDsp = Identifiant du point source de la commande CHANi = Numéro de la route concernée RFU = Réservé pour utilisation future | | | | | | |

### B/ Exemples de trames de données

T = 0 pour une trame de données ou une réponse à une trame de données
L = 0 si trame de 256 octets de données
L = 1 si trame de 64 Koctets de données
DL = Longueur des données en octets
DATA = Données d'application
CHANi = numéro de canal de routage

### Trame de 255 octets de données

| | En-tête | | | | |
|---|---|---|---|---|---|
| Taille | 1 bit | 1 bit | 6 bits | 1 octet | 0 à 255 octets |
| Signifie ou contient | T | L | CHANi | DL | DATA |
| Valeur | 0 | 0 | 0-63 | 255 | |

### Trame de 64K octets de données

| | En-tête | | | | |
|---|---|---|---|---|---|
| Taille | 1 bit | 1 bit | 6 bits | 2 octets | 0 à 65535 octets |
| Signifie ou contient | T | L | CHANi | DL | DATA |
| Valeur | 0 | 1 | 0-63 | 65535 | |

### Message "Accusé de réception sans erreur"

| Taille | 1 bit | 1 bit | 6 bits |
|---|---|---|---|
| Signifie ou contient | T | Pas d'erreur | CHANi |
| Valeur | 0 | 0 | 0-63 |

### Message "Erreur de réception"

| Taille | 1 bit | 1 bit | 6 bits | 1 octet |
|---|---|---|---|---|
| Signifie ou contient | T | Erreur | **CHANi** | Code de l'erreur |
| Valeur | **0** | **1** | 0-63 | 0-255 |

### Annexe 2 faisant partie intégrant de la description - Exemples de tables de routage

**Tableau 1: Exemple de table de routage dynamique avec des points sources localisés dans HP1 ou HP2**

| | | | | **IDdp** | | |
|---|---|---|---|---|---|---|
| **CHANi** | **IDsp** | **PTi** | **Mi** | **Envoyer** | **Notifier** | **Commentaires** |
| 1 | ID(P1) | PT1 | M1 | ID(Pc) | ID(P2) | Processeur HP1 vers interface CLINT en mode lecteur ISOA |
| 2 | ID(P1) | PT2 | M1 | ID(Pc) | - | Processeur HP1 vers interface CLINT en mode lecteur ISOB |
| 3 | ID(P1) | PT3 | M1 | ID(Pc) | - | Processeur HP1 vers interface CLINT en mode lecteur ISO15 |
| 4 | ID(P1) | PT1 | M3 | ID(Pc) | ID(P2) | Processeur HP1 vers interface CLINT en mode "device" ISOA |
| 5 | ID(P1) | PT2 | M3 | ID(Pc) | - | Processeur HP1 vers interface CLINT en mode "device" ISOB |
| 6 | ID(P1) | PT3 | M3 | ID(Pc) | - | Processeur HP1 vers interface CLINT en mode "device" ISO15 |
| 7 | ID(P1) | - | - | ID(P2) | | Processeur HP1 vers carte SIM (HP2) |
| 8 | ID(P2) | - | - | ID(P1) | - | Carte SIM (HP2) vers processeur HP1 |
| 9 | ID(P2) | PT1 | M1 | ID(Pc) | - | Carte SIM (HP2) vers interface CLINT en mode lecteur ISOA |
| 10 | ID(P2) | PT2 | M1 | ID(Pc) | ID(P2) | Carte SIM (HP2) vers interface CLINT en mode lecteur ISOB |
| 11 | ID(P2) | PT3 | M1 | ID(Pc) | ID(P2) | Carte SIM (HP2) vers interface CLINT en mode lecteur ISO15 |
| 12 | ID(P2) | PT1 | M3 | ID(Pc) | - | Carte SIM (HP2) vers interface CLINT en mode "device" ISOA |
| 13 | ID(P2) | PT2 | M3 | ID(Pc) | ID(P2) | Carte SIM (HP2) vers interface CLINT en mode "device" ISOB |
| 14 | ID(P2) | PT3 | M3 | ID(Pc) | ID(P2) | Carte SIM (HP2) vers interface CLINT en mode "device" ISO15 |

**Tableau 2 : Exemple de table de routage préenregistrée avec des points sources localisés dans HP1 ou HP2**

| | | | | **IDdp** | | | | |
|---|---|---|---|---|---|---|---|---|
| **CHANi** | **IDsp** | **PTi** | **Mi** | **Envoyer** | **Notifier** | **Ouvert** | **Occupé** | **Commentaires** |
| 1 | ID(P1) | PT 1 | M1l | ID(Pc) | ID(P2) | | 1 | Processeur HP1 vers interface CLINT en mode lecteur ISOA |
| 2 | ID(P1) | PT2 | M1 | ID(Pc) | - | | 0 | Processeur HP1 vers interface CLINT en mode lecteur ISOB |
| 3 | ID(P1) | PT3 | Ml | ID(Pc) | - | | 0 | Processeur HP1 vers interface CLINT en mode lecteur ISO15 |
| 4 | ID(P1) | PT 1 | M3 | ID(Pc) | ID(P2) | | 0 | Processeur HP1 vers interface CLINT en mode "device" ISOA |
| 5 | ID(P1) | PT2 | M3 | ID(Pc) | - | | 0 | Processeur HP1 vers interface CLINT en mode "device" ISOB |
| 6 | ID(P1) | PT3 | M3 | ID(Pc) | - | | 0 | Processeur HP1 vers interface CLINT en mode "device" ISO15 |
| 7 | ID(P1) | - | - | ID(Pc) | - | | 1 | Processeur HP1 vers carte SIM (HP2) |
| 8 | ID(P2) | - | - | ID(P1) | - | | 0 | Carte SIM (HP2) vers processeur HP1 |
| 9 | ID(P2) | PT1 | M1 | ID(Pc) | - | | 0 | Carte SIM (HP2) vers interface CLINT en mode lecteur ISOA |
| 10 | ID(P2) | PT2I | M1 | ID(Pc) | ID(P2) | | 0 | Carte SIM (HP2) vers interface CLINT en mode lecteur ISOB |
| 11 | ID(P2) | PT3 | M1 | ID(Pc) | ID(P2) | | 0 | Carte SIM (HP2) vers interface CLINT en mode lecteur ISO15. |
| 12 | ID(P2) | PT1 | M3 | ID(Pc) | - | | 1 | Carte SIM (HP2) vers interface CLINT en mode "device" ISOA |
| 13 | ID(P2) | PT2 | M3 | ID(PC) | ID(P2) | | 0 | Carte SIM (HP2) vers interface CLINT en mode "device" ISOB |
| 14 | ID(P2) | PT3 | M3 | ID(Pc) | ID(P2) | | 0 | Carte SIM (HP2) vers interface CLINT en mode "device" ISO15 |

**Tableau 3 : Exemple de table de routage dynamique avec un point source localisé dans l'interface CLINT et sans mettre en oeuvre le second aspect de l'invention (toutes les données sont envoyées aux deux processeurs hôtes HP1, HP2).**

| **CHANi** | **IDsp** | **PTi** | **Mi** | **IDdp** | | **Commentaires** |
|---|---|---|---|---|---|---|
| 40 | ID(Pc) | PT1 | M1 | ID(P1) | ID(P2) | Interface CLINT en mode lecteur ISO A vers processeurs HP1, HP2 |
| 41 | ID(Pc) | PT2 | M1 | ID(P1) | ID(P2) | Interface CLINT en mode lecteur ISO B vers processeurs HP1, HP2 |
| 42 | ID(Pc) | PT3 | M1 | ID(P1) | ID(P2) | Interface CLINT en mode lecteur ISO 15693 vers processeurs HP1, HP2 |
| 43 | ID(Pc) | PT1 | M2 | ID(P2) | ID(P2) | Interface CLINT en mode émulation ISO A vers processeurs HP1, HP2 |
| 44 | ID(Pc) | PT2 | M2 | ID(P1) | ID(P2) | Interface CLINT en mode émulation ISO B vers processeurs HP1, HP2 |
| 45 | ID(Pc) | PT3 | M2 | ID(P1) | ID(P2) | Interface CLINT en mode émulation ISO 15693 vers processeurs HP1, HP2 |
| 46 | ID(Pc) | PT1 | M3 | ID(P1) | ID(P2) | Interface CLINT en mode "device" ISO A vers processeurs HP1, HP2 |
| 47 | ID(Pc) | PT2 | M3 | ID(P1) | ID(P2) | Interface CLINT en mode "device" ISO B vers processeurs HP1, HP2 |
| 48 | ID(Pc) | PT3 | M3. | ID(P1) | ID(P2) | Interface CLINT en mode "device" ISO 15693 vers processeurs HP1, HP2 |

**Tableau 4 : Exemple de table de routage préenregistrée ayant un point source localisé dans l'interface CLINT (second aspect de l'invention)**

| | | | | **IDdp** | | | | |
|---|---|---|---|---|---|---|---|---|
| **CHANi** | **IDsp** | **PTi** | **Mi** | **Envoyer** | **Notifier** | **Ouvert** | **Utilisé** | **Commentaire** |
| 40 | ID(Pc) | PT1 | M1 | ID(P1) | ID(P2) | | | Interface CLINT en mode lecteur ISO A vers processeur HP1 |
| 41 | ID(Pc) | PT2 | M1 | ID(P1) | ID(P2) | | | Interface CLINT en mode lecteur ISO B vers processeur HP1 |
| 42 | ID(Pc) | PT3 | M1 | ID(P2) | | | | Interface CLINT en mode lecteur ISO 15693 vers carte SIM (HP2) |
| 43 | ID(Pc) | PT1 | M2 | ID(P2) | | | | Interface CLINT en mode émulation carte ISO A vers carte SIM (HP2) |
| 44 | ID(Pc) | PT2 | M2 | ID(P1) | - | | | Interface CLINT en mode émulation carte ISO B vers processeur HP1 |
| 45 | ID(Pc) | PT3 | M2 | - | ID(P2) | | | Interface CLINT en mode émulation carte ISO 15693 vers carte SIM (HP2) (notification uniquement) |
| 46 | ID(Pc) | PT1 | M3 | ID(P1) | ID(P2) | | | Mode "device" ISO A; appariement géré par le processeur hôte |
| 47 | ID(Pc) | PT2 | M3 | - | - | | | Aucune action (configuration interdite) |
| 48 | ID(Pc) | PT3 | M3 | ID(P1) | ID(P2) | | | Mode "device" ISO 15693 ; appariement géré par le processeur hôte |

## Revendications

1. Procédé de contrôle de l'exécution d'une application dans un système comprenant plusieurs processeurs hôte et une interface d'émission/réception de données sans contact (CLINT) de type NFC, pilotée par un contrôleur (NFCC), les processeurs hôte, le contrôleur et l'interface d'émission/réception étant interconnectés,
**caractérisé en ce que** plusieurs chemins de données sont définis dans le système, chaque chemin de données comprenant un point source (P1, P3) et un point de destination (P1, P2, P3, Pc), chacun des points source et destination étant localisés dans l'un des processeurs hôte ou dans l'interface d'émission/ réception, le contrôle de l'exécution d'une application étant basé sur un contrôle d'un des chemins de données dans lequel des données de l'application sont transmises, le procédé comprenant des étapes consistant à :
- recevoir par le contrôleur une requête d'utilisation d'un des chemins de données (CMD), émise par le point source du chemin de données et désignant le point de destination du chemin de données,
- si le chemin de données est dans un état non ouvert, demander l'autorisation d'ouvrir le chemin de données à une fonction de contrôle d'application exécutée par un premier des processeurs hôte, et
- ouvrir le chemin de données si la fonction de contrôle d'application autorise l'ouverture du chemin de données, afin de permettre à l'application d'être exécutée.

2. Procédé selon la revendication 1, dans lequel le premier processeur hôte (HP2) est un circuit sécurisé, tel qu'un circuit intégré de carte SIM.

3. Procédé selon la revendication 2, dans lequel l'application est exécutée par au moins un second processeur hôte (HP1, HP3).

4. Procédé selon l'une des revendications 1 à 3, comprenant une étape préliminaire d'authentification de la fonction de contrôle d'application, conduite avant l'étape de demande d'autorisation, l'ouverture du chemin de données n'étant pas autorisée si la fonction de contrôle d'application n'a pas été authentifiée.

5. Procédé selon la revendication 4, comprenant une étape consistant à fournir à la fonction de contrôle d'application une clé de session (SESK) qui est utilisée ensuite pour chiffrer les données échangées avec la fonction de contrôle d'application, si la fonction de contrôle d'application a été authentifiée.

6. Procédé selon l'une des revendications 1 à 5, comprenant une étape d'authentification par la fonction de contrôle d'application, du point source ayant émis la requête d'utilisation du chemin de données (CMD), la fonction de contrôle d'application autorisant l'ouverture du chemin de données que si l'authentification a réussi.

7. Procédé selon la revendication 6, dans lequel l'authentification du point source ayant émis la requête d'utilisation du chemin de données (CMD) comprend une étape de vérification d'un certificat (CE) fourni par une autorité de certification (CA) à un processeur hôte (HP1, HP3) dans lequel est localisé le point source (P1, P3) à authentifier.

8. Procédé selon l'une des revendications 1 à 7, dans lequel l'ouverture du chemin de données comprend les étapes consistant à :
- attribuer au chemin de données un numéro de canal de routage (CHANi), et mémoriser le numéro de canal de routage et des paramètres de routage comprenant au moins un identifiant (IDsp) du point source et un identifiant (IDdp) du point de destination,
- envoyer au point de destination, des données fournies par le point source en les encapsulant dans une trame (DF) ayant un champ d'en-tête comprenant le numéro de canal de routage, et
- sur réception de données encapsulées dans une trame (DF) ayant un champ d'en-tête comprenant le numéro de canal de routage, transmettre les données vers le point de destination des données correspondant à l'identifiant du point de destination mémorisé.

9. Procédé selon la revendication 8, dans lequel la fonction de contrôle d'application autorise ou non l'ouverture d'un chemin de donnée en fonction des paramètres de routage du chemin de données à ouvrir.

10. Procédé selon l'une des revendications 1 à 9, dans lequel l'interface d'émission/réception (CLINT) est configurable selon plusieurs modes de fonctionnement (Mi, M1, M2, M3) et selon plusieurs protocoles de communication sans contact (PTi, PT1, PT2, PT3), la fonction de contrôle d'application autorisant ou non l'ouverture d'un chemin de donnée en fonction d'un des modes de fonctionnement et d'un des protocoles de communication, attribués au chemin de données à ouvrir.

11. Procédé selon la revendication 10, comprenant, en réponse à une autorisation d'ouverture de chemin de données entre un point source (P1, P3) et un point de destination (Pc) localisé dans l'interface d'émission/réception de données sans contact (CLINT), une étape d'ouverture d'un chemin de données entre le point source et l'interface d'émission/réception pour qu'elle émette des données dans un canal de transmission de données sans contact en utilisant des paramètres de mode de fonctionnement (Mi) et de protocole de communication sans contact (PTi) mémorisés pour le chemin de données par l'intermédiaire duquel les données à émettre ont été reçues.

12. Procédé selon l'une des revendications 1 à 11, comprenant l'ouverture simultanée plusieurs chemins de données, le numéro de canal de routage (CHANi) et les paramètres de routage de chaque chemin de données ouvert étant mémorisés dans une table de routage, le procédé comprenant une étape de recherche dans la table de routage d'un point de destination de données reçues encapsulées dans une trame (DF), en utilisant le numéro de canal de routage en tant qu'index de sélection du point de destination.

13. Procédé selon l'une des revendications 1 à 12, comprenant les étapes consistant à :
- préenregistrer dans une table de routage (RT) des chemins de données comprenant chacun un identifiant d'un point de destination (IDdp), un paramètre de mode de fonctionnement (Mi) de l'interface d'émission/réception, un paramètre de protocole de communication sans contact (PTi), et un indicateur ouvert/fermé du chemin de données, et
- lorsque des données sont reçues par l'interface d'émission/réception via un canal de transmission de données sans contact, déterminer au moins un point de destination des données en recherchant dans la table de routage un chemin de données ouvert ayant un paramètre de mode de fonctionnement (Mi) et un paramètre de protocole de communication sans contact (PTi) correspondant aux paramètres de mode de fonctionnement et de protocole de communication sans contact utilisés par l'interface d'émission/réception pour créer le canal de transmission de données sans contact par l'intermédiaire duquel les données sont reçues.

14. Dispositif (NFCR2) de contrôle de l'exécution d'une application dans un système comprenant plusieurs processeurs hôte et une interface d'émission/réception de données sans contact (CLINT) de type NFC, pilotée par un contrôleur (NFCC), les processeurs hôte, le contrôleur et l'interface d'émission/réception étant interconnectés,
**caractérisé en ce que** plusieurs chemins de données sont définis dans le système, chaque chemin de données comprenant un point source (P1, P3) et un point de destination (P1, P2, P3, Pc), chacun des points source et destination étant localisés dans l'un des processeurs hôte ou dans l'interface d'émission/réception, le contrôle de l'exécution d'une application étant basé sur un contrôle d'un des chemins de données dans lequel des données de l'application sont transmises, le dispositif de contrôle étant configuré pour mettre en oeuvre le procédé selon l'une des revendications 1 à 13.

15. Dispositif selon la revendication 14, dans lequel le système comprend au moins un premier processeur hôte (HP2) exécutant la fonction de contrôle d'application, et au moins un port d'entrée/sortie (INT2) pour relier l'interface d'émission/réception au processeur hôte (HP2), le premier processeur hôte (HP2) pouvant être un circuit intégré sécurisé tel qu'un circuit intégré de carte SIM.

16. Dispositif selon l'une des revendications 14 et 15, dans lequel le système comprend au moins un second processeur hôte (HP1, HP3) exécutant l'application.

## Patentansprüche

1. Verfahren zum Steuern der Ausführung einer Anwendung in einem System, das mehrere Hostprozessoren und eine kontaktlose Daten-Sende-/Empfangsschnittstelle (CLINT) vom NFC-Typ umfasst, die von einer Steuereinheit (NFCC) gesteuert wird, wobei die Hostprozessoren, die Steuereinheit und die Sende-/Empfangsschnittstelle verbunden sind, **dadurch gekennzeichnet, dass** mehrere Datenpfade im System definiert sind, wobei jeder Datenpfad einen Ausgangspunkt (P1, P3) und einen Bestimmungspunkt (P1, P2, P3, Pc) umfasst, wobei jeder Ausgangs- und Bestimmungspunkt in einem der Hostprozessoren oder in der Sende-/Empfangsschnittstelle lokalisiert ist, wobei das Steuern der Ausführung einer Anwendung auf einem Steuern eines der Datenpfade basiert, in dem Anwendungsdaten ausgesandt werden, das Verfahren umfassend die folgenden Schritte:
- die Steuereinheit empfängt eine Anforderung zur Verwendung eines der Datenpfade (CMD), die vom Ausgangspunkt des Datenpfads ausgesandt wird und die den Bestimmungspunkt des Datenpfads benennt,
- wenn der Datenpfad in einem nicht eröffneten Zustand ist, dann wird eine von einem ersten der Hostprozessoren ausgeführte Anwendungssteuerfunktion die Genehmigung beantragt, den Datenpfad zu eröffnen, und
- wenn die Anwendungssteuerfunktion die Eröffnung des Datenpfads genehmigt, dann wird der Datenpfad eröffnet, damit die Anwendung ausgeführt werden kann.

2. Verfahren nach Anspruch 1, bei dem der erste Hostprozessor (HP2) ein gesicherter Schaltkreis in der Art eines integrierten Schaltkreises einer SIM-Karte ist.

3. Verfahren nach Anspruch 2, bei dem die Anwendung von wenigstens einem zweiten Hostprozessor (HP1, HP3) ausgeführt wird.

4. Verfahren nach einem der Ansprüche 1 bis 3, umfassend einen vorbereitenden Schritt der Authentifizierung der Anwendungssteuerfunktion, der vor dem Genehmigungsantragsschritt durchgeführt wird, wobei die Eröffnung des Datenpfads nicht genehmigt wird, wenn die Anwendungssteuerfunktion nicht authentifiziert worden ist.

5. Verfahren nach Anspruch 4, umfassend einen Schritt, der darin besteht, der Anwendungssteuerfunktion einen Sitzungsschlüssel (SESK) zu liefern, der danach verwendet wird, um die mit der Anwendungssteuerfunktion ausgetauschten Daten zu verschlüsseln, wenn die Anwendungssteuerfunktion authentifiziert worden ist.

6. Verfahren nach einem der Ansprüche 1 bis 5, umfassend einen durch die Anwendungssteuerfunktion durchgeführten Schritt der Authentifizierung des Ausgangspunktes, der die Anforderung zur Verwendung des Datenpfads (CMD) ausgesandt hat, wobei die Anwendungssteuerfunktion die Eröffnung des Datenpfads nur dann genehmigt, wenn die Authentifizierung gelungen ist.

7. Verfahren nach Anspruch 6, bei dem die Authentifizierung des Ausgangspunktes, der die Anforderung zur Verwendung des Datenpfads (CMD) ausgesandt hat, einen Schritt der Prüfung eines Zertifikats (CE) umfasst, das einem Hostprozessor (HP1, HP3), in dem der zu authentifizierende Ausgangspunkt (P1, P3) lokalisiert ist, von einer Zertifizierungsstelle (CA) geliefert wird.

8. Verfahren nach einem der Ansprüche 1 bis 7, bei dem die Eröffnung des Datenpfads die Schritte umfasst, die darin bestehen:
- dem Datenpfad eine Routingkanalnummer (CHANi) zuzuweisen, und die Routingkanalnummer und wenigstens einen Identifizierer (IDsp) des Ausgangspunktes und einen Identifizierer (IDdp) des Bestimmungspunktes umfassende Routingparameter zu speichern,
- Daten an den Bestimmungspunkt zu senden, die von dem Ausgangspunkt geliefert werden, wobei sie in einem Datenübertragungsblock (DF), der ein die Routingkanalnummer umfassendes Header-Feld aufweist, verkapselt sind, und
- beim Empfang von Daten, die in einem Datenübertragungsblock (DF) verkapselt sind, der ein die Routingkanalnummer umfassendes Header-Feld aufweist, die Daten an den Bestimmungspunkt der Daten zu übertragen, der dem Identifizierer des gespeicherten Bestimmungspunktes entspricht.

9. Verfahren nach Anspruch 8, bei dem die Anwendungssteuerfunktion die Eröffnung eines Datenpfads abhängig von den Routingparametern des zu eröffnenden Datenpfads genehmigt oder nicht.

10. Verfahren nach einem der Ansprüche 1 bis 9, bei dem die Sende-/Empfangsschnittstelle (CLINT) gemäß mehreren Betriebsmodi (Mi, M1, M2, M3) und mehreren kontaktlosen Kommunikationsprotokollen (PTi, PT1, PT2, PT3) konfigurierbar ist, wobei die Anwendungssteuerfunktion die Eröffnung eines Datenpfads abhängig von einem der Betriebsmodi und einem der Kommunikationsprotokolle, die dem zu eröffnenden Datenpfad zugewiesen werden, genehmigt oder nicht.

11. Verfahren nach Anspruch 10, umfassend, als Antwort auf eine Genehmigung zur Datenpfaderöffnung zwischen einem Ausgangspunkt (P1, P3) und einem in der kontaktlosen Daten-Sende-/Empfangsschnittstelle (CLINT) lokalisierten Bestimmungspunkt (Pc), einen Schritt der Eröffnung eines Datenpfads zwischen dem Ausgangspunkt und der Sende-/Empfangsschnittstelle, damit sie Daten in einem kontaktlosen Datenübertragungskanal unter Verwendung von Betriebsmodus- (Mi) und kontaktlosen Kommunikationsprotokollparametern (PTi), die für den Datenpfad, über den die zu sendenden Daten empfangen worden sind, gespeichert sind.

12. Verfahren nach einem der Ansprüche 1 bis 11, umfassend die gleichzeitige Eröffnung mehrerer Datenpfade, wobei die Routingkanalnummer (CHANi) und die Routingparameter jedes eröffneten Datenpfads in einer Routing-Tabelle gespeichert sind, das Verfahren umfassend einen Schritt, der darin besteht, in der Routing-Tabelle einen Bestimmungspunkt von in einem Datenübertragungsblock (DF) verkapselt empfangenen Daten unter Verwendung der Routingkanalnummer als Index für die Auswahl des Bestimmungspunktes zu suchen.

13. Verfahren nach einem der Ansprüche 1 bis 12, umfassend die Schritte, die darin bestehen:
- in einer Routing-Tabelle (RT) Datenpfade vorabzuspeichern, die jeweils einen Identifizierer eines Bestimmungspunktes (IDdp), einen Betriebsmodusparameter (Mi) der Sende-/Empfangsschnittstelle, einen kontaktlosen Kommunikationsprotokollparameter (PTi), und ein Flag umfassen, das anzeigt, ob der Datenpfad offen/zu ist, und
- wenn Daten von der Sende-/Empfangsschnittstelle über einen kontaktlosen Datenübertragungskanal empfangen werden, wenigstens einen Bestimmungspunkt der Daten festzulegen, indem in der Routing-Tabelle ein eröffneter Datenpfad gesucht wird, der einen Betriebsmodusparameter (Mi) und einen kontaktlosen Kommunikationsprotokollparameter (PTi) aufweist, die den von der kontaktlosen Daten-Sende-/Empfangsschnittstelle zur Erzeugung des kontaktlosen Datenübertragungskanals, über den die Daten empfangen werden, verwendeten Betriebsmodus- und kontaktlosen Kommunikationsprotokollparametern entsprechen.

14. Vorrichtung (NFCR2) zum Steuern der Ausführung einer Anwendung in einem System, das mehrere Hostprozessoren und eine kontaktlose Daten-Sende-/Empfangsschnittstelle (CLINT) vom NFC-Typ umfasst, die von einer Steuereinheit (NFCC) gesteuert wird, wobei die Hostprozessoren, die Steuereinheit und die Sende-/Empfangsschnittstelle verbunden sind,
**dadurch gekennzeichnet, dass** mehrere Datenpfade im System definiert sind, wobei jeder Datenpfad einen Ausgangspunkt (P1, P3) und einen Bestimmungspunkt (P1, P2, P3, Pc) umfasst, wobei jeder Ausgangs- und Bestimmungspunkt in einem der Hostprozessoren oder in der Sende-/Empfangsschnittstelle lokalisiert ist, wobei das Steuern der Ausführung einer Anwendung auf einem Steuern eines der Datenpfade basiert, in dem Anwendungsdaten ausgesandt werden, wobei die Steuervorrichtung konfiguriert ist, um das Verfahren nach einem der Ansprüche 1 bis 13 auszuführen.

15. Vorrichtung nach Anspruch 14, bei der das System wenigstens einen ersten die Anwendungssteuerfunktion ausführenden Hostprozessor (HP2) und wenigstens einen Eingangs-/Ausgangs-Port (INT2) zum Verbinden der Sende-/Empfangsschnittstelle mit dem Hostprozessor (HP2) umfasst, wobei der erste Hostprozessor (HP2) ein gesicherter integrierter Schaltkreis in der Art eines integrierten Schaltkreises einer SIM-Karte sein kann.

16. Vorrichtung nach einem der Ansprüche 14 und 15, bei der das System wenigstens einen zweiten Hostprozessor (HP1, HP3) umfasst, der die Anwendung ausführt.

## Claims

1. A method for controlling the execution of an application in a system comprising several host processors and a contactless data sending/receiving interface (CLINT) of NFC type, driven by a controller (NFCC), the host processors, the controller and the sending/receiving interface being interconnected,
**characterized in that** several data paths are defined in the system, each data path comprising a source point (P1, P3) and a destination point (P1, P2, P3, Pc), each of the source and destination points being located in one of the host processors or in the sending/receiving interface, the control of the execution of an application being based on a control of one of the data paths in which data of the application is transmitted, the method comprising steps of:
- receiving by the controller a request to use one of the data paths (CMD), sent by the source point of the data path and designating the destination point of the data path,
- if the data path is in a non-open state, requesting authorisation to open the data path from an application control function executed by a first of the host processors, and
- opening the data path if the application control function authorises the opening of the data path, to enable the application to be executed.

2. The method according to claim 2, wherein the first host processor (HP2) is a secured circuit, such as a SIM card integrated circuit.

3. The method according to claim 2, wherein the application is executed by at least a second host processor (HP1, HP3).

4. The method according to one of claims 1 to 3, comprising a preliminary step of authentication of the application control function, performed before the authorization request step, the opening of the data path not being authorized if the application control function has not been authenticated.

5. The method according to claim 4, comprising a step of supplying to the application control function a session key (SESK) which is then used to cipher the data exchanged with the application control function, if the application control function has been authenticated.

6. The method according to one of claims 1 to 5, comprising a step of authentication, by the application control function, of the source point that sent the request to use the data path (CMD), the application control function authorizing the opening of the data path only if the authentication has succeeded.

7. The method according to claim 6, wherein the authentication of the source point which sent the request to use the data path (CMD) comprises a step of checking a certificate (CE) supplied by a certification authority (CA) to a host processor (HP1, HP3) in which the source point (P1, P3) to be authenticated is located.

8. The method according to one of claims 1 to 7, wherein the opening of the data path comprises the steps of:
- allocating a routing channel number (CHANi) to the data path, and memorizing the routing channel number and routing parameters comprising at least one identifier (IDsp) of the source point and one identifier (IDdp) of the destination point,
- sending to the destination point, data supplied by the source point by encapsulating them in a frame (DF) having a header field including the routing channel number, and
- upon receiving data encapsulated in a frame (DF) having a header field including the routing channel number, transmitting the data to the data destination point corresponding to the identifier of the destination point memorized.

9. The method according to claim 8, wherein the application control function authorizes or not the opening of a data path according to the routing parameters of the data path to be opened.

10. The method according to one of claims 1 to 9, wherein the sending/receiving interface (CLINT) is configurable according to several operating modes (Mi, M1, M2, M3) and according to several contactless communication protocols (PTi, PT1, PT2, PT3), the application control function authorizing or not the opening of a data path according to one of the operating modes and to one of the communication protocols allocated to the data path to be opened.

11. Method according to claim 10, comprising, in response to an authorization for opening a data path between a source point (P1, P3) and a destination point (Pc) located in the contactless data sending/receiving interface (CLINT), a step of opening a data path between the source point and the sending/receiving interface so that it sends data in a contactless data transmission channel using operating mode (Mi) and contactless communication protocol (PTi) parameters memorized for the data path through which the data to be sent has been received.

12. The method according to one of claims 1 to 11, comprising the simultaneous opening of several data paths, the routing channel number (CHANi) and the routing parameters of each data path opened being memorized in a routing table, the method comprising a step of searching the routing table for a destination point of data received encapsulated in a frame (DF), using the routing channel number as index for selecting the destination point.

13. The method according to one of claims 1 to 12, comprising the steps of:
- prestoring data paths in a routing table (RT), each data path comprising an identifier of a destination point (IDdp), an operating mode parameter (Mi) of the sending/receiving interface, a contactless communication protocol (PTi) parameter, and a data path open/closed indicator, and
- when data is received by the sending/receiving interface via a contactless data transmission channel, determining at least one data destination point by searching the routing table for an open data path having an operating mode parameter (Mi) and a contactless communication protocol parameter (PTi) corresponding to the operating mode and contactless communication protocol parameters used by the sending/receiving interface to create the contactless data transmission channel through which the data is received.

14. A device (NFCR2) for controlling the execution of an application in a system comprising several host processors and a contactless data sending/receiving interface (CLINT) of NFC type, driven by a controller (NFCC), the host processors, the controller and the sending/receiving interface being interconnected
**characterized in that** several data paths are defined in the system, each data path comprising a source point (P1, P3) and a destination point (P1, P2, P3, Pc), each of the source and destination points being located in one of the host processors or in the sending/receiving interface, the control of the execution of an application being based on a control of one of the data paths in which data of the application is transmitted, the control device being configured to implement the method according to one of claims 1 to 13.

15. The device according to claim 14, wherein the system comprises at least a first host processor (HP2) executing the application control function, and at least one input/output port (INT2) to couple the sending/receiving interface to the host processor (HP2), the first host processor (HP2) possibly being a secured integrated circuit such as a SIM card integrated circuit.

16. The device according to one of claims 14 and 15, wherein the system comprises at least one second host processor (HP1, HP3) executing the application.
